# FASCICULE DE BREVET EUROPEEN

(11) **EP 1 487 631 B1**
(45) Date de publication et mention de la délivrance du brevet: **23.04.2008**
(21) Numéro de dépôt: 03744405.6
(22) Date de dépôt: 17.03.2003
(51) Int. Cl.: B29D 11/00

(54) **PROCEDE POUR L OBTENTION D UNE LENTILLE OPTIQUE AINSI Q UE JOINT ET DISPOSITIF POUR SA MISE EN OEUVRE**
VERFAHREN ZUM ERHALT EINER OPTISCHEN LINSE UND VERBINDUNG UND VORRICHTUNG ZUR IMPLENTIERUNG DES VERFAHRENS
METHOD FOR OBTAINING AN OPTICAL LENS AND JOINT AND DEVICE FOR THE IMPLEMENTATION THEREOF

(30) Priorité: 19.03.2002 FR 0203380
(43) Date de publication de la demande: 22.12.2004
(73) Titulaire: ESSILOR INTERNATIONAL (Compagnie Générale d'Optique), F-94220 Charenton-le-Pont (FR)
(72) Inventeur: TRIDON, Jean-Marc, F-21000 Dijon (FR); SOAVE, Pascal, F-21110 Longecourt en Plaine (FR)
(74) Mandataire: Quantin, Bruno Marie Henri
(86) Numéro de dépôt international: PCT/FR2003/000846
(87) Numéro de publication internationale: WO 2003/078144

(56) Documents cités:
- EP-A- 0 028 975
- WO-A-00/30836
- US-A- 3 070 846
- US-A- 3 136 000
- US-A- 4 251 474
- US-A- 4 257 988
- PATENT ABSTRACTS OF JAPAN vol. 016, no. 565 (P-1457), 7 décembre 1992 (1992-12-07) & JP 04 218016 A (ASAHI OPUTEIKARU:KK), 7 août 1992 (1992-08-07)
- PATENT ABSTRACTS OF JAPAN vol. 1998, no. 03, 27 février 1998 (1998-02-27) & JP 09 300478 A (NIKON CORP), 25 novembre 1997 (1997-11-25)

## Description

L'invention a trait à l'obtention d'une lentille optique, en particulier mais non exclusivement une lentille ophtalmique, à partir d'une matière polymérisable.

On sait qu'il est possible d'obtenir une telle lentille avec un moule formé de deux coquilles disposées à distance en regard l'une de l'autre et d'un joint annulaire coopérant avec la périphérie des coquilles afin de définir une cavité de moulage. En général, la face des coquilles tournée vers la cavité est respectivement concave et convexe et a une forme correspondant respectivement à la face antérieure et à la face postérieure de la lentille à obtenir afin que ces faces antérieure et postérieure aient la forme requise dès le démoulage ou après un usinage de finition.

On connaît déjà divers procédés d'obtention d'une lentille optique avec un tel moule, et en particulier un procédé dans lequel on commence par positionner les coquilles de moulage sur le joint, on met en place une pince élastique de maintien des coquilles, on procède manuellement au remplissage de la cavité à l'aide d'une buse d'injection que l'on insère entre le joint et l'une des coquilles grâce à une déformation du joint et un léger écartement de la coquille en question à l'encontre de la pince, le remplissage étant effectué jusqu'au débordement afin de chasser l'excédent d'air, le moule rempli et maintenu à l'état assemblé par la pince étant ensuite transporté jusqu'à une étuve à eau dans laquelle la matière introduite dans le moule est polymérisée à la chaleur.

Afin de permettre au moule d'accompagner le retrait que subit lors de la polymérisation la matière qu'il contient, le joint est adapté à être comprimé axialement sous l'effet du rapprochement des coquilles provoqué par le retrait.

On a déjà proposé, notamment dans le brevet américain 3,136,000 et dans la demande internationale WO 00/30836, des moules du genre susmentionné dont le joint a respectivement un et plusieurs trous latéraux, la matière polymérisable étant introduite dans la cavité du moule grâce à une buse mise en place dans le trou de remplissage à la façon d'une seringue, l'échappement de l'air initialement présent dans la cavité de moulage se faisant respectivement grâce à un canal séparé de la buse et grâce à au moins un trou d'évent distinct du trou de remplissage. Après introduction de la matière polymérisable dans le moule, le trou unique et les trous multiples sont obturés respectivement par un voile qui se remet en place devant le trou unique lors du retrait de la buse et par des bouchons que l'on vient enfoncer dans les trous multiples depuis l'extérieur.

On a également déjà proposé, notamment dans le brevet américain 4,251,474, en l'absence de trou dans le joint, de disposer le moule horizontalement, d'introduire entre le joint et la coquille supérieure la buse de remplissage puis, une fois le moule rempli et après enlèvement de la buse, d'abaisser, grâce à un effort externe mécanisé, la coquille supérieure alors que la coquille inférieure est contrebutée, de sorte que la partie excédentaire de la matière introduite dans le moule franchit la lèvre du joint coopérant avec la coquille supérieure puis déborde hors du moule. Lorsqu'on relâche la coquille supérieure, le joint tend à revenir à sa configuration initiale mais, l'air ne pouvant pas pénétrer dans la cavité de moulage, les coquilles de moulage restent chacune maintenues au contact du joint à la façon d'une ventouse, de sorte qu'il n'est pas besoin d'utiliser la pince élastique susmentionnée, laquelle ne pourrait d'ailleurs fournir qu'un effort élastique modeste en regard des efforts que l'on peut produire de façon mécanisée. US-A-30 70 846, US-A-4257988 et JP-A-04 21 8016 discutent les moules pour l'obtention des lentilles.

L'invention vise à améliorer les conditions d'utilisation des moules du genre susmentionné.

Elle propose à cet effet un procédé pour l'obtention d'une lentille optique à partir d'une matière polymérisable, dans lequel on utilise un moule formé de deux coquilles disposées à distance en regard l'une de l'autre et d'un joint annulaire comportant des moyens pour coopérer avec la périphérie desdites coquilles afin de définir une cavité de moulage, ledit joint étant adapté à être comprimé élastiquement sous l'effet d'un rapprochement desdites coquilles, lequel procédé comporte une étape de remplissage de ladite cavité de moulage avec de la dite matière polymérisable puis une étape de polymérisation de la matière remplissant la cavité de moulage, et comporte également, avant ladite étape de polymérisation, tant une étape d'exercice d'un effort externe mécanisé de rapprochement desdites coquilles qu'une étape de relâchement dudit effort, lequel effort produit une compression du joint assurant une étanchéité entre le joint et les coquilles ; caractérisé en ce qu'on prévoit dans ledit joint annulaire, à l'écart desdits moyens pour coopérer avec la périphérie des coquilles, un trou de remplissage ; en ce que dans ladite étape de remplissage, l'introduction de ladite matière dans la cavité est effectuée par ledit trou de remplissage ; et en ce que ladite introduction de la matière est effectuée après ladite étape d'exercice d'un effort externe mécanisé de rapprochement et avant ladite étape de relâchement dudit effort. Elle propose aussi un joint annulaire selon la revendication 28 et un dispositif selon la revendication 41.

Le fait d'exercer l'effort externe mécanisé de rapprochement des coquilles non pas après mais avant le remplissage du moule, combiné au fait d'effectuer le remplissage par un trou ménagé dans le joint à l'écart des moyens dont est muni celui-ci pour coopérer avec la périphérie des coquilles, permet d'effectuer le remplissage du joint sans qu'aucune fuite hors de la cavité de moulage ne se produise entre les coquilles et le joint.

Cette absence de fuites est particulièrement avantageuse, non seulement en raison des économies de matière polymérisable découlant de l'absence de perte par débordement autour des coquilles, mais aussi et surtout parce qu'après le démoulage on évite les opérations qui étaient liées au débordement de matière au niveau des moyens pour coopérer avec la périphérie des coquilles, qui comportent en pratique une lèvre à l'extérieur de laquelle existe une rainure : d'une part, on évite d'intervenir sur la lentille après démoulage pour éliminer la bavure correspondante tandis que, d'autre part, le nettoyage du joint avant recyclage en est facilité.

Selon des caractéristiques préférées, on prévoit un bouchon d'obturation de chaque trou que comporte ledit joint tandis que ladite étape de remplissage comporte, après ladite introduction de matière, et avant ladite étape de relâchement dudit effort, une étape d'obturation de chaque dit trou avec un dit bouchon.

Ainsi, lorsque l'on effectue l'étape de relâchement de l'effort, il se produit au niveau de chaque coquille un effet de ventouse grâce auquel le joint reste par lui-même à l'état assemblé.

De préférence, on prévoit comme trou dans ledit joint annulaire exclusivement ledit trou de remplissage.

L'opération de remplissage du joint est ainsi particulièrement simple et commode, puisqu'après l'opération d'introduction de la matière par le trou de remplissage, il suffit d'une seule opération de mise en place d'un bouchon.

De préférence encore, on effectue ladite étape de remplissage en disposant ledit moule verticalement avec ledit trou de remplissage situé au sommet dudit joint.

L'opération d'introduction de la matière polymérisable dans le moule peut ainsi s'effectuer dans d'excellentes conditions, en particulier en ce qui concerne l'évacuation de l'air initialement contenu dans le moule : le débouché du trou de remplissage étant situé au sommet de la cavité, on est sûr que l'air initialement contenu dans le moule a été entièrement évacué lorsque le trou de remplissage commence lui-même à se remplir.

Selon d'autres caractéristiques préférées, pour des raisons de simplicité et de commodité de mise en oeuvre :
- on prévoit autour dudit trou de remplissage un bossage en saillie par rapport à la surface latérale du joint ; et/ou
- on prévoit que ledit trou de remplissage est orienté suivant une direction radiale ; et/ou
- on prévoit que ledit trou de remplissage est disposé à mi-distance ou à peu près desdits moyens pour coopérer respectivement avec une première dite coquille et avec la seconde dite coquille ; et/ou
- ladite étape d'exercice d'un effort externe mécanisé de rapprochement est effectuée en rapprochant lesdites coquilles jusqu'à atteindre un effort de rapprochement prédéterminé ; et éventuellement
- on produit ledit effort de rapprochement avec un vérin relié à une centrale de commande ; et/ou
- dans ladite étape d'exercice d'un effort de rapprochement, on applique ledit effort sur lesdites coquilles grâce à deux manchons respectifs de diamètre légèrement inférieur à celui desdites coquilles.

Selon d'autres caractéristiques préférées, également pour des raisons de simplicité et de commodité de mise en oeuvre :
- on prévoit une unité de réception dudit moule et on effectue ladite étape d'exercice d'un effort de rapprochement et ladite étape de relâchement dudit effort avec ladite unité de réception ; et éventuellement
- on prévoit dans ladite unité de réception du moule, des moyens de centrage et des moyens de positionnement angulaire ; et éventuellement
- lesdits moyens de centrage comportent deux doigts orientés longitudinalement adaptés à coopérer avec la surface latérale dudit joint tandis que lesdits moyens de positionnement angulaire comportent une fourchette adaptée à coopérer avec un bossage en saillie par rapport à la surface latérale dudit joint ; et/ou
- on prévoit, pour effectuer ladite étape de remplissage, un poste d'introduction de ladite matière polymérisable dans la cavité dudit moule et un poste de bouchage dudit trou de remplissage, ledit poste d'introduction et ledit poste de bouchage étant disposés côte à côte ; et on prévoit que ladite unité de réception du moule est mobile entre une première position où elle est à l'aplomb du poste de bouchage et une deuxième position où elle est à l'aplomb du poste d'introduction.

Selon encore d'autres caractéristiques préférées, pour les mêmes raisons :
- on effectue ladite étape ladite étape d'introduction de la matière polymérisable avec un poste qui comporte une buse d'introduction de ladite matière et une buse d'aspiration d'un surplus de matière ; et éventuellement
- ladite buse d'introduction de matière est inclinée ; et/ou
- on prévoit que l'extrémité distale de ladite buse d'introduction est en-dessous de l'extrémité distale de ladite buse d'aspiration.

Selon encore d'autres caractéristiques préférées, toujours pour les mêmes raisons :
- on prévoit un bouchon d'obturation dudit trou de remplissage comportant un trou borgne ; et on effectue une étape d'obturation dudit trou de remplissage avec ledit bouchon grâce à un poste de bouchage comportant une canule adaptée à s'engager dans ledit trou borgne dudit bouchon ; et éventuellement
- on relie ladite canule à une source de vide pour maintenir ledit bouchon en place sur ladite canule tandis qu'on met ladite canule à l'atmosphère pour libérer ledit bouchon; et/ou
- on entraîne ledit poste de bouchage pour enfoncer ledit bouchon dans ledit trou de remplissage.

Selon encore d'autres caractéristiques préférées, pour les mêmes raisons :
- on prévoit une patte relativement étroite en saillie par rapport à la surface latérale dudit joint et présentant une surface transversale d'extrémité ayant un emplacement prédéterminé par rapport au reste du joint ; et éventuellement
- on prévoit, pour effectuer ladite étape de remplissage, un poste d'introduction de ladite matière polymérisable dans la cavité dudit moule et un poste de bouchage dudit trou de remplissage, ledit poste d'introduction et ledit poste de bouchage étant disposés côte à côte ; on prévoit une unité de réception dudit moule dans une position prédéterminée, avec ladite unité de réception qui est mobile entre une première position où elle est à l'aplomb du poste de bouchage et une deuxième position où elle est à l'aplomb du poste d'introduction ; et éventuellement
- on prévoit au moins une cellule optique de détection de la position du moule vis-à-vis dudit poste de remplissage ou vis-à-vis dudit poste de bouchage ; et on positionne ladite unité de réception du moule à l'aplomb dudit poste de remplissage ou à l'aplomb dudit poste de bouchage en liaison avec ladite cellule optique ; et éventuellement
- on prévoit une cellule optique pour chacun desdits postes de remplissage et poste de bouchage.

L'invention vise également, sous un deuxième aspect, le joint annulaire tel qu'exposé ci-dessus et, sous un troisième aspect, un dispositif comportant des moyens pour mettre en oeuvre le procédé exposé ci-dessus, selon les revendications 29 et 41.

On observera que le joint susmentionné est susceptible d'être utilisé dans d'autres conditions que celles exposées ci-dessus, et, en particulier, pour mouler des matières ne subissant pas de retrait, auquel cas l'aptitude à la déformation axiale du joint n'est pas indispensable.

On observera également que l'identité de matière entre le bouchon et le reste du joint est intéressant, notamment pour des questions de recyclage, quelque soit la matière et/ou les conditions opératoires ; et que la même remarque s'applique à la détection de position du moule grâce à la patte relativement étroite prévue en saillie sur la surface externe du joint et grâce à au moins une cellule optique.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue en perspective éclatée d'un moule pour obtenir une lentille optique conformément à l'invention ;
- la figure 2 est une vue partielle en perspective-coupe du joint que comporte ce moule, sans son bouchon d'obturation, le plan suivant lequel la coupe a été effectuée contenant l'axe du joint et l'axe du trou de remplissage ;
- la figure 3 est une vue similaire à la figure 2, mais avec le bouchon d'obturation en place dans le trou de remplissage ;
- la figure 4 est une vue de dessus du moule, sans le bouchon, en place sur les doigts de support et sur la fourchette de positionnement angulaire que comporte l'unité de réception du moule prévue dans le dispositif illustré schématiquement sur la figure 6 ;
- la figure 5 est la vue en élévation-coupe repérée par V-V sur la figure 4 ;
- la figure 6 est une représentation schématique en élévation d'un dispositif pour l'obtention d'une lentille optique utilisant le moule illustré sur les figures 1 à 5 ;
- la figure 7 est une vue schématique en élévation-coupe, prise suivant le même plan de coupe que sur les figures 2 et 3, du moule à l'état assemblé, sans le bouchon du joint ;
- la figure 8 est une vue similaire de ce moule, en place dans l'unité de réception (les doigts de support et la fourchette ne sont pas illustrés), l'unité exerçant sur le moule un effort externe mécanisé de rapprochement des coquilles ;
- les figures 9 à 13 sont des vues partielles similaires du moule, illustrant les étapes successives de l'opération de remplissage ; et
- la figure 14 est une vue similaire du moule, à l'état rempli, tel qu'il se maintient lui-même par effet de ventouse lorsqu'on l'extrait de l'unité de réception du dispositif illustré sur la figure 6.

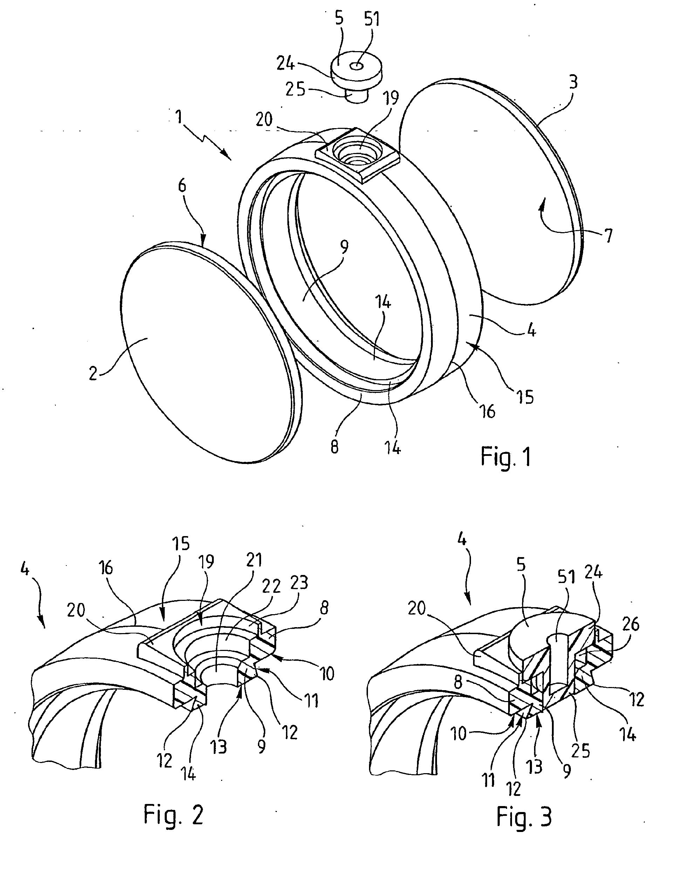

Le moule 1 montré en perspective éclatée sur la figure 1 comporte deux coquilles 2 et 3 et un joint annulaire 4 muni d'un bouchon amovible 5.

Les coquilles 2 et 3 sont classiquement réalisées en verre relativement épais, avec une face concave et l'autre convexe et avec une tranche à contour circulaire. La face utile 6 de la coquille 2, située du côté du joint 4, est concave et présente une conformation correspondant à la face antérieure de la lentille à obtenir. La face utile 7 de la coquille 3, située du côté du joint 4, est convexe et correspond à la face postérieure de la lentille à obtenir.

Le joint 4 est réalisé par moulage d'une matière élastomère synthétique. Il présente une conformation globalement annulaire avec une ceinture externe 8 à laquelle se raccorde, du côté interne, un bourrelet 9 plus étroit que la ceinture 8, ce bourrelet ayant en section la forme d'une queue d'aronde dont le côté étroit est celui par lequel le bourrelet se raccorde à la ceinture 8.

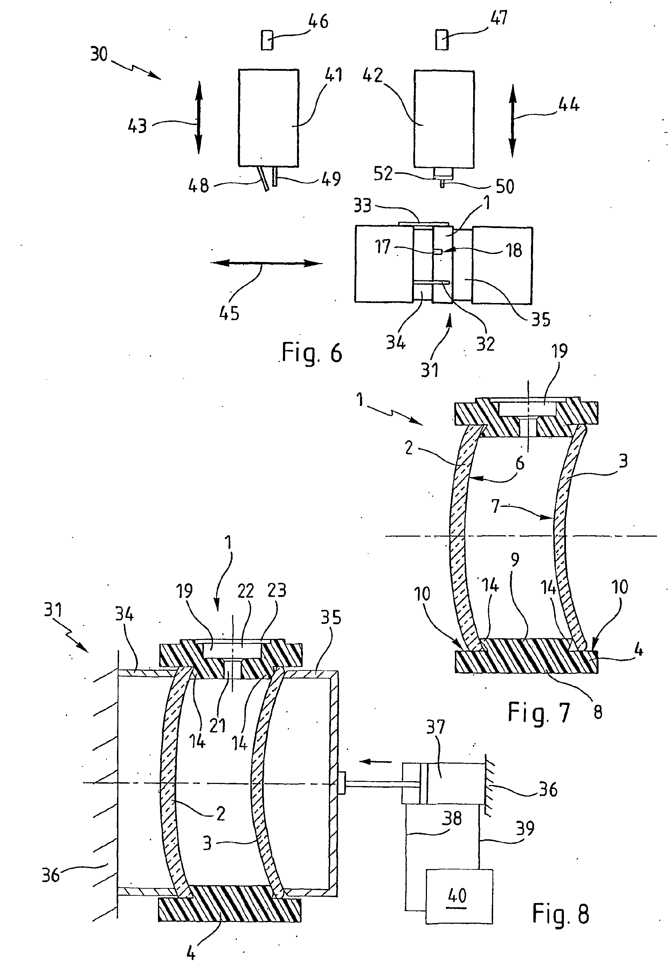

Il existe ainsi, de part et d'autre du bourrelet 9, un lamage propre à la réception de l'une des coquilles 2 et 3, la surface périphérique de ce lamage étant la surface interne 10 de la ceinture 8, dont le diamètre correspond à celui des coquilles 2 et 3, tandis que la surface d'épaulement de ce lamage est la surface de flanc 11 du bourrelet 9, surface qui est inclinée vers le centre du joint et vers l'extérieur. Chaque arête 12 située à la jonction entre une surface 11 et la surface périphérique interne 13 du bourrelet 9 forme donc l'extrémité d'une lèvre 14 apte à coopérer à étanchéité avec l'une des coquilles 2 et 3, ainsi qu'on le voit sur les figures 7 et 8.

La surface externe 15 du joint 4 présente une légère dépouille de part et d'autre d'une arête centrale 16 qui correspond au plan de joint du moule servant à la fabrication du joint 4.

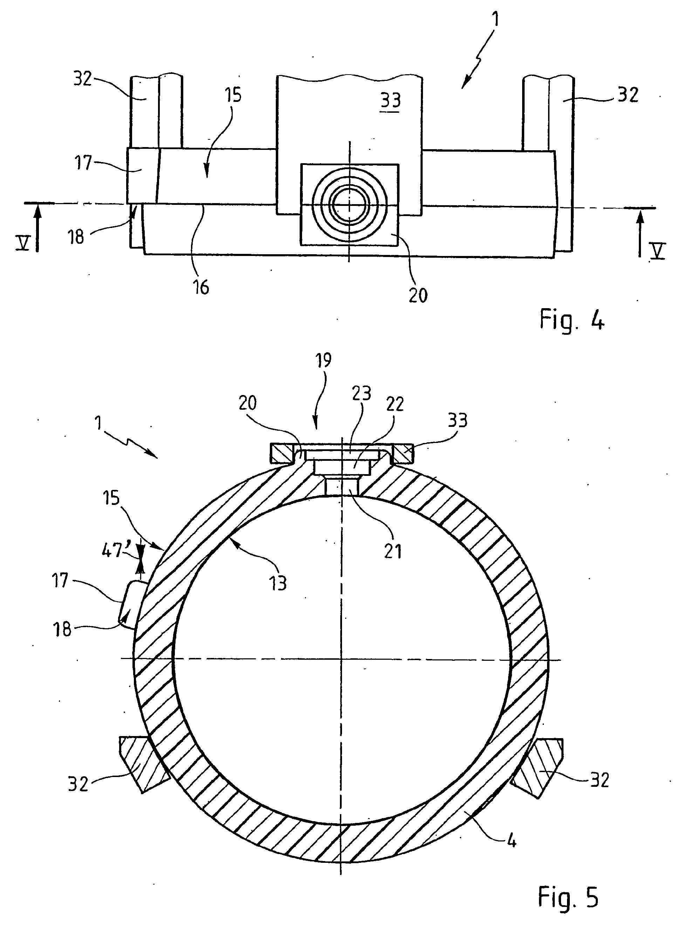

Ainsi qu'on le voit sur les figures 4 à 6, il saille de la surface latérale 15 une patte 17 relativement étroite qui ne s'étend que d'un côté de l'arête 16, la patte 17 présentant plus précisément une surface transversale d'extrémité 18 qui se trouve dans le même plan que l'arête 16.

L'écart angulaire entre la patte 17 et le trou 19 prévu pour être obturé par le bouchon 5, est tel que quand le trou 19 est disposé, comme illustré sur les dessins, au sommet du joint 4, la patte 17 est visible au-dessus du joint 14.

Cela permet, comme on le verra plus loin, d'effectuer un positionnement du moule 1, et donc du trou 19, suivant la direction axiale.

Le trou 19 est orienté suivant une direction radiale et il est centré sur le plan qui contient l'arête 16, soit à mi-distance ou à peu près des deux lamages opposés, délimités chacun par les surfaces 10 et 11, que comporte le joint 4 pour coopérer avec les coquilles 2 et 3.

Autour du trou 19, le joint 4 présente un bossage 20 en saillie par rapport à la surface 15.

Entre ses deux débouchés, respectivement dans la surface externe du bossage 20 et dans la surface interne 13 du bourrelet 9, le trou 19 présente trois tronçons 21, 22 et 23 de diamètres différents.

Le tronçon 21, qui est le plus étroit, s'étend entre une première extrémité, située au niveau de la surface 13, et une deuxième extrémité par laquelle il se raccorde à une première extrémité du tronçon 22, lequel a un diamètre plus grand que le tronçon 21 tandis qu'un léger chanfrein est prévu à la jonction entre les tronçons 21 et 22, ce dernier s'étendant jusqu'à une deuxième extrémité par laquelle il se raccorde au tronçon 23, dont le diamètre est plus grand, le tronçon 23 s'étendant jusqu'à la surface supérieure du bossage 20.

Ainsi, d'une façon générale, les tronçons 21, 22 et 23 du trou 19 ont un agencement en gradins.

Le bouchon 5 est fait dans la même matière que le joint 4. Il comporte une tête 24 et un corps 25. Le diamètre de la tête 24 correspond au diamètre du tronçon 23 tandis que le diamètre du corps 25 correspond au diamètre du tronçon 21, la longueur du corps 25 correspondant à la somme des longueurs du tronçon 21 et du tronçon 22. Ainsi, lorsque le bouchon 5 est en place dans le trou 19, comme montré notamment sur la figure 3, l'extrémité libre du corps 25 est à fleur de la surface 13 tandis que la surface transversale de la tête 24 bordant le corps 25 est en appui sur la surface d'épaulement du tronçon 23.

L'ajustement entre le tronçon 21 et le corps 25 est légèrement serré de sorte que quand le corps 25 est en place dans le tronçon 21, ce dernier est obturé de façon étanche. De même, l'ajustement entre la tête 24 et le tronçon 23 est légèrement serré, la mise en place de la tête 24 dans le tronçon 23 obturant donc ce dernier de façon étanche.

Dans l'exemple illustré, le diamètre du tronçon 21 est de l'ordre de 7,8 mm, celui du tronçon 22 est de l'ordre de 16,6 mm et celui du tronçon 23 est de l'ordre de 17,8 mm tandis que la longueur du tronçon 21 est de l'ordre de 3 mm, celle du tronçon 22 est de l'ordre de 3,7 mm et celle du tronçon 23 est de l'ordre de 2,4 mm.

On observera que quand le bouchon 5 est en place dans le trou 19, il existe dans le tronçon 22, autour du corps 25, une chambre étanche 26 obturée d'un côté par la coopération entre le corps 25 et le tronçon 21 et, de l'autre côté, par la coopération entre la tête 24 et le tronçon 23.

On observera également, vu les dimensions précisées ci-dessus, que le volume de la chambre 26 est supérieur au volume du tronçon 21.

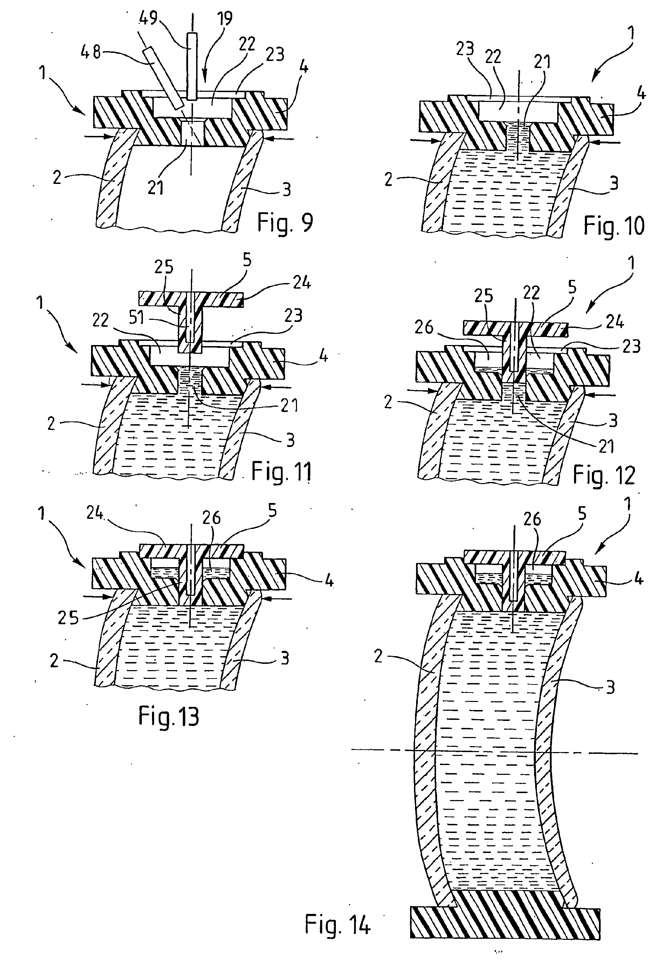

Il en résulte, comme on le voit sur les figures 10 à 13, qui, de même que les figures 6 à 9, sont très schématiques, contrairement aux figures 1 à 5, que si l'on remplit la cavité de moulage délimitée par les coquilles 2 et 3 mises en place dans le joint 4 jusqu'à ce que la matière polymérisable vienne au ras de la jonction entre les tronçons 21 et 22 puis que l'on met en place le bouchon 5, alors la matière contenue dans le tronçon 21 peut se loger dans la chambre 26 et, une fois le bouchon 5 entièrement enfoncé, y être maintenue de façon étanche, de sorte que tout débordement de matière polymérisable hors du moule est évité.

Pour obtenir une lentille optique avec le moule 1, on met en place les coquilles 2 et 3 dans le joint 4, ainsi que montré notamment sur la figure 7, puis l'on positionne le moule 1 ainsi obtenu dans le dispositif de remplissage 30 illustré sur la figure 6, et plus précisément dans l'unité 31 de réception du moule que comporte ce dispositif.

Pour recevoir le moule 1, l'unité 31 comporte deux doigts 32 et une fourchette 33 orientés longitudinalement.

Comme on le voit plus particulièrement sur les figures 4 et 5, le moule 1 est disposé, dans l'unité 31, verticalement avec le trou de remplissage qui est situé au sommet du joint 4, les doigts 32 et la fourchette 33 étant placés angulairement à des positions correspondant sensiblement, sur le cadran d'une montre, à 4 heures, 8 heures et 12 heures. Le joint 4 repose simplement sur les doigts 32, qui procurent un centrage du joint 4 vis-à-vis de l'unité 31 tandis que le bossage 20 est engagé dans la fourchette 33, ce qui procure un positionnement angulaire du joint 4 par rapport à l'unité 31, et assure en particulier que le trou 19 se trouve au sommet du joint 4.

De chaque côté de l'emplacement prévu pour le moule 1, l'unité 31 comporte un manchon, respectivement 34 et 35, comme on le voit plus en détail sur la figure 8 (les doigts 32 et la fourchette 33 ne sont pas représentés sur cette figure).

Le manchon 34 est directement fixé au bâti 36 de l'unité 31 tandis qu'il est prévu, entre le bâti 36 et le manchon 35, un vérin hydraulique 37 dont le corps est fixé au bâti 36 et dont la tige est fixée au manchon 35. Les chambres du vérin 37 sont reliées par des conduites respectives 38 et 39 à une centrale de commande 40 qui comporte classiquement une pompe d'alimentation en flux hydraulique et des moyens de distribution et de régulation.

L'unité 31 admet une configuration de mise en place et d'évacuation du moule 1 dans laquelle la tige du piston 37 est rentrée, c'est-à-dire une position où le manchon 35 est décalé vers la droite par rapport à la position illustrée sur la figure 8.

C'est dans cette configuration de l'unité 31 que l'on met en place le moule 1 en le faisant coulisser le long des doigts 32 tout en engageant le bossage 20 dans la fourchette 33, jusqu'à ce que la coquille 2 vienne en contact avec le manchon 34.

L'opérateur agit alors sur la centrale 40, afin de lancer des moyens de commande automatiques prévus dans celle-ci pour faire sortir la tige du vérin 37 jusqu'à ce que soit atteinte dans la chambre sous pression de ce vérin, en l'occurrence la chambre que l'on voit à droite sur la figure 8, un seuil de pression prédéterminé, les moyens de commande prévus dans la centrale 40 maintenant ensuite la position de la tige du vérin 37.

Au cours du mouvement de sortie de tige du vérin 37, le manchon 35 est venu au contact de la coquille 3 puis la poursuite du mouvement de sortie de tige a correspondu à l'exercice d'un effort de rapprochement des coquilles 2 et 3, qui a eu pour effet que le joint 4 s'est comprimé élastiquement suivant la direction axiale, en particulier au niveau des lèvres 14, ainsi qu'on le voit en comparant les figures 7 et 8.

Cette compression du joint 4, sous l'effet d'un effort externe mécanisé, permet d'assurer une excellente étanchéité entre le joint 4 et les coquilles 2 et 3.

Dans l'exemple illustré, l'élastomère synthétique dans lequel est fait le joint 4 présente, conformément à la méthode d'essai NF T 46-002, un module d'élasticité à 100 % de l'ordre de 0,8 à 1,3 Mpa, une résistance à la rupture de l'ordre de 3 à 7 Mpa et un allongement à la rupture de l'ordre de 500 à 750 % tandis que sa dureté, selon la méthode d'essai NF ISO 868, est de l'ordre de 30 à 49 Pts SHORE A (30s) ; alors que le diamètre du vérin 37 est de 40 mm et que le seuil de pression prédéterminé jusqu'auquel les moyens de commande prévus dans la centrale 40 font sortir la tige du vérin 37, est de l'ordre de 0,3 Mpa.

L'effort externe mécanisé exercé par le vérin 37 sur le moule 1 par l'intermédiaire des manchons 34 et 35 est ainsi relativement élevé, de l'ordre de 37,7 daN.

On observera que la surface de contact entre le manchon 34 et la coquille 2 est située juste à l'opposé de la surface de contact entre la lèvre annulaire 14 et la coquille 2 et de même la surface de contact entre le manchon 35 et la coquille 3 est située juste à l'opposé de la surface de contact entre la lèvre annulaire 14 et la coquille 3, de sorte que l'on limite au maximum les risques de déformation des coquilles 2 et 3.

On va maintenant décrire plus en détail la structure et le fonctionnement du dispositif 30.

Ce dernier, en outre de l'unité 31, comporte un poste d'introduction de matière liquide polymérisable 41 et un poste de bouchage 42.

Chacun des postes 41 et 42 est mobile suivant la direction verticale et peut être entraîné vers le haut et vers le bas, ainsi qu'illustré par les flèches doubles 43 et 44, tandis que l'unité de réception 31 est mobile suivant la direction horizontale et peut être entraînée vers la droite et vers la gauche, ainsi qu'illustré par la flèche double 45.

Au niveau de chacun des postes 41 et 42, se trouve une cellule optique respective 46 et 47 de détection de la position du moule 1 suivant la direction axiale, chacune des cellules 46 et 47 comportant un émetteur et un récepteur de faisceaux lumineux tels que les faisceaux incident et réfléchi 47' illustrés partiellement sur la figure 5. Le faisceau 47' incident est orienté verticalement et, lorsque le moule 1 se trouve sous la cellule émettant ce faisceau, celui-ci passe au ras de la surface 15, et en tous cas à une distance de celle-ci inférieure à l'épaisseur de la patte 17. Ainsi, lorsque le moule se trouve dans une position où la patte 17 est à l'aplomb du faisceau incident 47', ce faisceau est réfléchi par la patte 17 et la cellule ayant émis le faisceau reçoit un faisceau réfléchi qu'elle détecte. En revanche, lorsque le moule 1 est dans une position où la patte 17 ne se trouve pas à l'aplomb du faisceau incident 48, aucune réflexion de ce faisceau ne se produit sur la patte 17 de sorte qu'il n'existe aucun faisceau réfléchi.

Ainsi, il est possible, à partir de l'information que les cellules respectives 46 et 47 reçoivent ou non un faisceau réfléchi, de positionner très précisément le moule 1 avec la surface 18 de la patte 17 qui se trouve dans l'alignement du faisceau émis, c'est-à-dire, la surface 18 étant située dans le plan sur lequel est centré le trou 19, dans une position où ce trou est centré par rapport respectivement au poste d'introduction de matière liquide polymérisable 41 et au poste de bouchage 42.

Le poste d'introduction de matière liquide polymérisable 41 comporte deux buses saillant vers le bas, respectivement une buse 48 d'introduction de la matière polymérisable dans la cavité du moule 1 et une buse 49 d'aspiration du surplus de matière dans le trou 19. La buse 49 se trouve dans le plan transversal contenant le faisceau émis par la cellule 46 et est centrée par rapport à l'unité 31.

Le poste de bouchage 42 comporte, en saillie vers le bas, une canule 50 de réception du bouchon 5, cette canule étant située dans le plan transversal qui contient le faisceau émis par la cellule 47 et centré par rapport à l'unité 31.

Pour coopérer avec la canule 50, le bouchon 5 comporte un trou borgne 51 ouvert du côté de la tête 24 et fermé du côté du corps 25, le trou 51 ayant un diamètre correspondant au diamètre externe de la canule 50, celle-ci étant reliée à une source de vide tandis qu'elle est entourée, à l'opposé de son extrémité libre, par une butée 52 formant un épaulement autour de la canule 50.

Lorsque l'unité 31 est dans sa configuration de mise en place et d'évacuation du moule 1, elle se trouve, comme illustré sur la figure 6, dans une position axiale telle que le moule se trouve à l'aplomb du poste de bouchage 42.

L'opérateur qui, avec une main, met en place le moule 1 comme expliqué précédemment sur les doigts 32 et sur la fourchette 33, enfile, par ailleurs, par exemple avec son autre main, le bouchon sur la canule 50, cette dernière pénétrant dans le trou borgne 51 jusqu'à ce que la face de la tête 24 opposée au corps 25 vienne contre la butée 52, le bouchon étant maintenu par aspiration grâce au fait que la canule 50 est alors connectée à une source de vide.

L'opérateur agit alors, comme expliqué précédemment, sur la centrale 40, pour que soit commandée la sortie de tige du vérin 37 jusqu'à l'exercice d'un effort externe de rapprochement entre les coquilles 2 et 3 d'intensité prédéterminée.

Ensuite, l'unité 31 est entraînée vers le poste d'introduction de matière liquide polymérisable 41, c'est-à-dire vers la gauche de la figure 6, les moyens d'entraînement étant commandés en liaison avec la cellule 46 afin que le moule 1 soit positionné, comme expliqué ci-dessus, avec la buse 49 qui est centrée par rapport au trou 19.

Le poste d'introduction de matière liquide polymérisable 41 est alors entraîné vers le bas jusqu'à ce que l'extrémité distale des buses 48 et 49 se trouvent dans le trou 19, ainsi que montré sur la figure 9.

Dans l'exemple illustré, l'extrémité distale tant de la buse 48 d'introduction de la matière polymérisable que l'extrémité distale de la buse 49 d'aspiration du surplus de matière se trouve dans le tronçon 22 du trou 19, et en tout cas au-dessus et en regard du tronçon 21, l'extrémité distale de la buse 49 étant située au-dessus de celle de la buse 48.

Alors que la buse 49 est disposée verticalement, la buse 48 est légèrement inclinée, de sorte que le jet de matière polymérisable que peut émettre cette buse est orientée en oblique par rapport au tronçon 21, le jet en question passant au travers de ce tronçon puis venant rencontrer la coquille 3, le long de laquelle coule la matière polymérisable lors du remplissage de la cavité du moule 1.

On notera qu'en pratique, la buse 48 est moins inclinée que sur le dessin très schématique de la figure 9 afin de permettre au jet de matière de passer au travers du tronçon 21 comme on vient de l'indiquer.

Le fait, pour la matière introduite dans la cavité de moulage, de couler le long de la paroi de la coquille 3, est favorable à l'homogénéité de la lentille à obtenir, et permet en particulier d'éviter la formation de bulles.

L'introduction de matière polymérisable se poursuit jusqu'à ce que le tronçon 21 et une partie du tronçon 22 soient remplis de matière polymérisable.

Etant donné que le tronçon 21 se trouve au sommet de la cavité de moulage, on est sûr, lorsque ce tronçon est lui-même rempli en matière polymérisable, qu'il ne subsiste plus d'air dans la cavité de moulage.

La buse 49 aspire alors le trop-plein de matière polymérisable. Son extrémité distale est positionnée par rapport au sommet du tronçon 21 de sorte que quand il y a désamorçage de l'aspiration, le niveau de matière polymérisable se trouve au ras du sommet du tronçon 21, ainsi que montré sur la figure 10. La différence de hauteur entre l'extrémité distale de la buse 49 et le sommet du tronçon 21 correspond à la hauteur de la colonne liquide de matière polymérisable qui subsiste entre le moment où le niveau de matière polymérisable passe en-dessous de celui de l'extrémité distale de la buse 49 et le moment où il y a rupture d'amorçage.

On notera que la surface de la matière liquide polymérisable est représentée parfaitement horizontale sur les dessins très schématiques des figures 10 et 11, mais qu'en pratique cette surface est bombée.

Une fois l'introduction de matière polymérisable terminée, c'est-à-dire lorsque cesse l'amorçage de l'aspiration de cette matière par la buse 49, le poste 41 est entraîné vers le haut pour revenir à sa position illustrée sur la figure 6, puis l'unité 31 de réception du moule 1 est entraînée horizontalement, vers le poste de bouchage 42, jusqu'à ce que le trou 19 soit positionné, comme expliqué précédemment, grâce à la cellule 47 et à la patte 17, dans une position où la canule 50, garnie du bouchon 5, est centrée par rapport au trou 19.

Le poste 42 est alors entraîné vers le bas, de sorte que le bouchon 5 pénètre progressivement dans le trou 19, ainsi que montré sur les figures 11 à 13.

Lors de la pénétration du corps 25 du bouchon dans le tronçon 21, la matière liquide polymérisable qui était contenue dans ce tronçon passe progressivement dans la chambre 26 dans laquelle, comme expliqué ci-dessus, elle se trouve emprisonnée de façon étanche en raison de l'obturation du tronçon 21 par le corps 25 du bouchon et de l'obturation du tronçon 23 par la tête 24.

On notera que le fait de chasser la matière liquide polymérisable qui était contenue dans le tronçon 21 vers la chambre 26, c'est-à-dire à l'opposé de la cavité de moulage, permet d'être sûr de ne pas introduire d'air dans la cavité de moulage à l'occasion de la mise en place du bouchon.

Lors du mouvement d'enfoncement du corps 25 dans le tronçon 21, la faible section de passage de la matière liquide polymérisable, entre le corps 25 et le pourtour du tronçon 21 crée une certaine surpression dans la cavité de moulage, mais cette surpression dynamique n'occasionne pas de fuite entre le joint 4 et les coquilles 2 et 3, en raison de l'effort externe exercé grâce aux manchons 34 et 35, cet effort externe ayant été maintenu pendant toute l'étape de remplissage, ainsi qu'illustré par des flèches sur les figures 9 à 13.

Une fois que la mise en place du bouchon 5 dans le trou 19 est achevée, c'est-à-dire une fois que le poste 42 est en bout de course de son déplacement vers le bas, on interrompt la liaison entre la canule 50 et la source de vide afin que la canule 50 soit mise à l'atmosphère, voire en légère surpression, ce qui libère le bouchon 5 du poste 42, lequel est ensuite ramené à sa position haute illustrée sur la figure 6.

L'opérateur agit ensuite sur la centrale de commande 40 afin que le fluide hydraulique circule dans les conduites 38 et 39 dans le sens permettant à la tige de vérin 37 de rentrer dans le corps de celui-ci, afin que le manchon 35 recule, c'est-à-dire se déplace vers la droite de la figure 8.

Le relâchement de l'effort externe de rapprochement des coquilles 2 et 3 qui se produit au début du mouvement de recul du manchon 35 n'a pas d'incidence sur le positionnement relatif des coquilles 2 et 3 vis-à-vis du joint 4, chacune des coquilles 2 et 3 étant maintenue en place par un effet de ventouse.

Le moule 1, rempli de matière liquide polymérisable se maintient ainsi par lui-même à l'état assemblé, ainsi que montré sur la figure 14. L'opérateur évacue alors de l'unité 31, et plus généralement du dispositif 30, le moule 1 à l'état rempli, lequel est ensuite transporté vers une étuve à eau dans laquelle il séjournera le temps voulu pour opérer la polymérisation de la matière présente dans la cavité de moulage.

Une fois la polymérisation effectuée, on procède au démoulage de la lentille ainsi obtenue par enlèvement du joint 4 puis des coquilles 2 et 3.

On notera que l'absence de fuite entre les coquilles 2 et 3 et les lèvres 14 a pour effet qu'il n'y a pas de matière polymérisée entre les surfaces 10 et 11 du joint 4, de sorte qu'aucune intervention n'est à effectuer sur la lentille après démoulage pour éliminer la bavure correspondante tandis que le nettoyage du joint avant recyclage, pour éliminer la matière polymérisée, en est facilité.

En fait, la seule partie du joint 4 sur laquelle reste de la matière polymérisée est la chambre 26, c'est-à-dire une zone très localisée et relativement facile à traiter en tant que telle.

Dans une variante non représentée, seule la cellule 46 est prévue : le positionnement du moule 1 à l'aplomb du poste 42 avant l'opération de bouchage est obtenu en déplaçant l'unité 31, à partir de la position où le moule 1 était à l'aplomb du poste 41, très exactement de la distance séparant les postes 41 et 42, grâce à l'emploi d'un moteur pas à pas.

Dans cette variante, en outre, la mise en place du moule 1 sur l'unité 31 se fait dans une position intermédiaire entre les positions où l'unité 31 est respectivement à l'aplomb du poste 41 et à l'aplomb du poste 42 : l'opérateur dispose ainsi de davantage d'espace pour enfiler le bouchon 5 sur la canule 50.

Dans l'exemple illustré, les cellules 46 et 47 sont situées au-dessus respectivement du poste 41 et du poste 42, mais il est possible de les placer partout ailleurs, où la patte 17 est visible.

Dans d'autres variantes non représentées, il n'est prévu que les tronçons tels que 21 et 22 pour le trou de remplissage, la tête du bouchon portant directement sur la surface latérale externe du joint ; davantage qu'un trou n'est prévu dans le joint à l'écart des moyens pour coopérer avec les coquilles de moulage tels que les épaulements délimités par les surfaces 10 et 11 ; le vérin hydraulique double effet 37 est remplacé par un autre type de vérin, par exemple un vérin pneumatique simple effet ; et/ou plus généralement un autre type de mécanisme que celui illustré sur la figure 8 est prévu pour produire un effort externe mécanisé de rapprochement des coquilles, ce mécanisme étant éventuellement manoeuvré à la main à la façon d'un étau ou d'un mandrin.

De nombreuses variantes sont également possibles dans le dimensionnement et les caractéristiques mécaniques de différents éléments illustrés.

Plus généralement, on rappelle que l'invention ne se limite pas aux exemples décrits et représentés.

## Revendications

1. Procédé pour l'obtention d'une lentille optique à partir d'une matière polymérisable, dans lequel on utilise un moule (1) formé de deux coquilles (2, 3) disposées à distance en regard l'une de l'autre et d'un joint annulaire (4) comportant des moyens (10, 11) pour coopérer avec la périphérie desdites coquilles (2, 3) afin de définir une cavité de moulage, ledit joint (4) étant adapté à être comprimé élastiquement sous l'effet d'un rapprochement desdites coquilles (2, 3), lequel procédé comporte une étape de remplissage de ladite cavité de moulage avec de la dite matière polymérisable puis une étape de polymérisation de la matière remplissant la cavité de moulage, et comporte également, avant ladite étape de polymérisation, tant une étape d'exercice d'un effort externe mécanisé de rapprochement desdites coquilles qu'une étape de relâchement dudit effort, lequel effort produit une compression du joint (4) assurant une étanchéité entre le joint (4) et les coquilles (2, 3) ; **caractérisé en ce qu'**on prévoit dans ledit joint annulaire (4), à l'écart desdits moyens (10, 11) pour coopérer avec la périphérie des coquilles (2, 3), un trou de remplissage (19) ; **en ce que** dans ladite étape de remplissage, l'introduction de ladite matière dans la cavité est effectuée par ledit trou de remplissage (19) ; et **en ce que** ladite introduction de la matière est effectuée après ladite étape d'exercice d'un effort externe mécanisé de rapprochement et avant ladite étape de relâchement dudit effort.

2. Procédé selon la revendication 1, **caractérisé en ce qu'**on prévoit un bouchon d'obturation (5) de chaque trou (19) que comporte ledit joint (4) tandis que ladite étape de remplissage comporte, après ladite introduction de matière, et avant ladite étape de relâchement dudit effort, une étape d'obturation de chaque dit trou (19) avec un dit bouchon (5).

3. Procédé selon la revendication 2, **caractérisé en ce qu'**on prévoit comme trou dans ledit joint annulaire (4) exclusivement ledit trou de remplissage (19).

4. Procédé selon la revendication 3, **caractérisé en ce qu'**on effectue ladite étape de remplissage en disposant ledit moule (1) verticalement avec ledit trou de remplissage (19) situé au sommet dudit joint (4).

5. Procédé selon la revendication 4, **caractérisé en ce qu'**on prévoit que ledit trou de remplissage comporte un premier tronçon (21) et un deuxième tronçon (22), le premier tronçon (21) s'étendant entre une première extrémité située du côté de ladite cavité de moulage et une deuxième extrémité par laquelle il se raccorde à une première extrémité dudit deuxième tronçon (22) ; **en ce qu'**on prévoit un bouchon d'obturation (5) dudit trou de remplissage comportant un corps (25) adapté à être ajusté serré dans ledit premier tronçon (21) du trou de remplissage (19) pour l'obturer et adapté à définir alors avec ledit deuxième tronçon (22) du trou de remplissage (19) une chambre (26) entourant ledit corps (25) du bouchon (5) ; et **en ce que** dans ladite étape d'introduction de la matière polymérisable dans la cavité, on remplit ladite cavité et ledit premier tronçon (21) du trou (19).

6. Procédé selon la revendication 5, **caractérisé en ce que** dans ladite étape de remplissage, on remplit ladite cavité de moulage et ledit premier tronçon (21) du trou de remplissage (19) jusqu'au ras de la jonction entre le premier tronçon (21) et le deuxième tronçon (22).

7. Procédé selon la revendication 6, **caractérisé en ce qu'**on prévoit que le volume de ladite chambre (26) entourant le corps (25) du bouchon (5) est supérieur au volume dudit premier tronçon (21) du trou de remplissage (19).

8. Procédé selon l'une quelconque des revendications 5 à 7, **caractérisé en ce qu'**on prévoit que ledit trou de remplissage (19) comporte également un troisième tronçon (23) qui s'étend entre une première extrémité par laquelle il se raccorde à la seconde extrémité du deuxième tronçon (22) et une deuxième extrémité qui débouche à l'extérieur dudit joint (4) ; et **en ce qu'**on prévoit que ledit bouchon d'obturation (5) comporte une tête (24) adaptée à être ajustée serrée dans ledit troisième tronçon (23) du trou de remplissage (19) pour l'obturer, de sorte que ladite chambre (26) est alors entièrement close.

9. Procédé selon l'une quelconque des revendications 1 à 8, **caractérisé en ce qu'**on prévoit autour dudit trou de remplissage (19) un bossage (20) en saillie par rapport à la surface latérale (15) du joint (4).

10. Procédé selon l'une quelconque des revendications 1 à 9, **caractérisé en ce qu'**on prévoit que ledit trou de remplissage (19) est orienté suivant une direction radiale.

11. Procédé selon l'une quelconque des revendications 1 à 10, **caractérisé en ce qu'**on prévoit que ledit trou de remplissage (19) est disposé à mi-distance ou à peu près desdits moyens (10, 11) pour coopérer respectivement avec une première dite coquille (2) et avec la seconde dite coquille (3).

12. Procédé selon l'une quelconque des revendications 1 à 11, **caractérisé en ce que** ladite étape d'exercice d'un effort externe mécanisé de rapprochement est effectuée en rapprochant lesdites coquilles jusqu'à atteindre un effort de rapprochement prédéterminé.

13. Procédé selon la revendication 12, **caractérisé en ce qu'**on produit ledit effort de rapprochement avec un vérin (37) relié à une centrale de commande (40).

14. Procédé selon l'une quelconque des revendications 12 ou 13, **caractérisé en ce que**, dans ladite étape d'exercice d'un effort de rapprochement, on applique ledit effort sur lesdites coquilles grâce à deux manchons respectifs (34, 35) de diamètre légèrement inférieur à celui desdites coquilles (2, 3).

15. Procédé selon l'une quelconque des revendications 1 à 14, **caractérisé en ce qu'**on prévoit une unité (31) de réception dudit moule (1) et **en ce qu'**on effectue ladite étape d'exercice d'un effort de rapprochement et ladite étape de relâchement dudit effort avec ladite unité de réception (31).

16. Procédé selon la revendication 15, **caractérisé en ce qu'**on prévoit dans ladite unité (31) de réception du moule (1), des moyens de centrage (32) et des moyens de positionnement angulaire (33).

17. Procédé selon la revendication 16, **caractérisé en ce que** lesdits moyens de centrage comportent deux doigts (32) orientés longitudinalement adaptés à coopérer avec la surface latérale (15) dudit joint (4) tandis que lesdits moyens de positionnement angulaire comportent une fourchette (33) adaptée à coopérer avec un bossage (20) en saillie par rapport à la surface latérale (15) dudit joint.

18. Procédé selon l'une quelconque des revendications 15 à 17, **caractérisé en ce qu'**on prévoit, pour effectuer ladite étape de remplissage, un poste (41) d'introduction de ladite matière polymérisable dans la cavité dudit moule (1) et un poste (42) de bouchage dudit trou de remplissage, ledit poste d'introduction (41) et ledit poste de bouchage (42) étant disposés côte à côte ; et **en ce qu'**on prévoit que ladite unité (31) de réception du moule (1) est mobile entre une première position où elle est à l'aplomb du poste de bouchage (42) et une deuxième position où elle est à l'aplomb du poste d'introduction (41).

19. Procédé selon l'une quelconque des revendications 1 à 18, **caractérisé en ce qu'**on effectue ladite étape d'introduction de la matière polymérisable avec un poste (41) qui comporte une buse (48) d'introduction de ladite matière et une buse (49) d'aspiration d'un surplus de matière.

20. Procédé selon la revendication 19, **caractérisé en ce que** ladite buse (48) d'introduction de matière est inclinée.

21. Procédé selon l'une quelconque des revendications 19 ou 20, **caractérisé en ce qu'**on prévoit que l'extrémité distale de ladite buse d'introduction (48) est en-dessous de l'extrémité distale de ladite buse d'aspiration (49).

22. Procédé selon l'une quelconque des revendications 1 à 21, **caractérisé en ce qu'**on prévoit un bouchon (5) d'obturation dudit trou de remplissage (19) comportant un trou borgne (51) ; et **en ce qu'**on effectue une étape d'obturation dudit trou de remplissage avec ledit bouchon grâce à un poste de bouchage (42) comportant une canule (50) adaptée à s'engager dans ledit trou borgne (51) dudit bouchon (5).

23. Procédé selon la revendication 22, **caractérisé en ce qu'**on relie ladite canule à une source de vide pour maintenir ledit bouchon en place sur ladite canule tandis qu'on met ladite canule (50) à l'atmosphère pour libérer ledit bouchon (5).

24. Procédé selon l'une quelconque des revendications 22 ou 23, **caractérisé en ce qu'**on entraîne ledit poste de bouchage (42) pour enfoncer ledit bouchon (5) dans ledit trou de remplissage (19).

25. Procédé selon l'une quelconque des revendications 1 à 24, **caractérisé en ce qu'**on prévoit une patte relativement étroite (17) en saillie par rapport à la surface latérale (15) dudit joint (4) et présentant une surface transversale d'extrémité (18) ayant un emplacement prédéterminé par rapport au reste du joint.

26. Procédé selon la revendication 25, **caractérisé en ce qu'**on prévoit, pour effectuer ladite étape de remplissage, un poste d'introduction (41) de ladite matière polymérisable dans la cavité dudit moule (1) et un poste (42) de bouchage dudit trou de remplissage (19), ledit poste d'introduction (41) et ledit poste de bouchage (42) étant disposés côte à côte ; **en ce qu'**on prévoit une unité (31) de réception dudit moule (1) dans une position prédéterminée, avec ladite unité (31) de réception qui est mobile entre une première position où elle est à l'aplomb du poste de bouchage (42) et une deuxième position où elle est à l'aplomb du poste d'introduction (41).

27. Procédé selon la revendication 26, **caractérisé en ce qu'**on prévoit au moins une cellule optique (46, 47) de détection de la position du moule (1) vis-à-vis dudit poste de remplissage (41) ou vis-à-vis dudit poste de bouchage (42) ; et **en ce qu'**on positionne ladite unité (31) de réception du moule à l'aplomb dudit poste de remplissage (41) ou à l'aplomb dudit poste de bouchage (42) en liaison avec ladite cellule optique (46, 47).

28. Procédé selon la revendication 27, **caractérisé en ce qu'**on prévoit une cellule optique (46, 47) pour chacun desdits postes de remplissage (41) et poste de bouchage (42).

29. Joint annulaire pour l'obtention d'une lentille optique à partir d'une matière polymérisable, convenant à la mise en oeuvre du procédé selon l'une quelconque des revendications 1 à 28, comportant des moyens (10, 11) pour coopérer avec la périphérie de deux coquilles de moulage (2, 3) disposées en regard l'une de l'autre afin de définir une cavité de moulage, adapté à être comprimée élastiquement sous l'effet d'un effort de rapprochement exercé entre les moyens (10, 11) pour coopérer avec la périphérie d'une première dite coquille (2) et les moyens (10, 11) pour coopérer avec la périphérie de la seconde dite coquille (3) ; **caractérisé en ce qu'**il comporte :
- à l'écart desdits moyens (10, 11) pour coopérer avec la périphérie des coquilles (2, 3), un trou de remplissage (19) comportant un premier tronçon (21) et une deuxième tronçon (22), le premier tronçon (21) s'étendant entre une première extrémité située du côté de ladite cavité de moulage et une deuxième extrémité par laquelle il se raccorde à une première extrémité du deuxième tronçon (22) ; et
- un bouchon d'obturation (5) comportant un corps (25) adapté à être ajusté serré dans ledit premier tronçon (21) du trou de remplissage (19) pour l'obturer et adapté à définir alors avec ledit deuxième tronçon (22) du trou de remplissage (19) une chambre (26) entourant ledit corps du bouchon (25).

30. Joint selon la revendication 29, **caractérisé en ce qu'**il comporte comme trou exclusivement ledit trou de remplissage (19).

31. Joint selon l'une quelconque des revendications 29 ou 30, **caractérisé en ce que** le volume de ladite chambre (26) entourant le corps (25) du bouchon (5) est supérieur au volume dudit premier tronçon (21) du trou de remplissage (19).

32. Joint selon l'une quelconque des revendications 29 à 31, **caractérisé en ce que** ledit trou de remplissage (19) comporte également un troisième tronçon (23) qui s'étend entre une première extrémité par laquelle il se raccorde à la seconde extrémité du deuxième tronçon (22) et une deuxième extrémité qui débouche à l'extérieur dudit joint (4) ; et **en ce que** ledit bouchon d'obturation (5) comporte une tête (24) adaptée à être ajustée serrée dans ledit troisième tronçon (23) du trou de remplissage (19) pour l'obturer, de sorte que ladite chambre (26) est alors entièrement close.

33. Joint selon l'une quelconque des revendications 29 à 32, **caractérisé en ce qu'**il comporte autour dudit trou de remplissage (19) un bossage (20) en saillie par rapport à sa surface latérale (15).

34. Joint selon l'une quelconque des revendications 29 à 33, **caractérisé en ce que** ledit trou de remplissage (19) est orienté suivant une direction radiale.

35. Joint selon l'une quelconque des revendications 29 à 34, **caractérisé en ce que** ledit trou de remplissage (19) est disposé à mi-distance ou à peu près desdits moyens (10, 11) pour coopérer respectivement avec une première dite coquille (2) et avec la seconde dite coquille (3).

36. Joint selon l'une quelconque des revendications 29 à 35, **caractérisé en ce qu'**il comporte une patte relativement étroite (17) en saillie par rapport à la surface latérale (15) dudit joint (4) et présentant une surface transversale d'extrémité (18) ayant un emplacement prédéterminé par rapport au reste du joint.

37. Joint selon la revendication 36, **caractérisé en ce que** l'écart angulaire entre ledit trou de remplissage (19) et ladite patte relativement étroite (17) est tel que quand ledit moule (1) est disposé avec ledit trou de remplissage (19) à son sommet, ladite patte (17) est visible au-dessus dudit joint (14).

38. Joint selon l'une quelconque des revendications 29 à 37, **caractérisé en ce que** ledit bouchon (5) d'obturation dudit trou de remplissage (19) comporte un trou borgne (51) fermé du côté dudit corps (25).

39. Joint selon l'une quelconque des revendications 29 à 38, **caractérisé en ce qu'**il comporte une ceinture (8) à laquelle se raccorde, du côté interne, un bourrelet (9) plus étroit que ladite ceinture (8), ce bourrelet ayant en section la forme d'une queue d'aronde dont le côté étroit est celui par lequel ledit bourrelet (9) se raccorde à ladite ceinture (8), de sorte qu'il existe de part et d'autre dudit bourrelet (9) un lamage propre à la réception de l'une desdites coquilles (2, 3).

40. Joint selon l'une quelconque des revendications 29 à 39, **caractérisé en ce que** ledit bouchon (5) et le reste dudit joint (4) sont faits dans la même matière.

41. Dispositif pour l'obtention d'une lentille optique à partir d'une matière polymérisable, convenant à la mise en oeuvre du procédé selon l'une quelconque des revendications 1 à 28 préalablement a ladite étape de polymérisation, comportant un moule (1) formé de deux coquilles de moulage (2, 3) disposées à distance en regard l'une de l'autre et d'un joint annulaire (4) comportant des moyens (10, 11) pour coopérer avec la périphérie desdites coquilles (2, 3) afin de définir une cavité de moulage, ledit joint (4) étant adapté à être comprimé élastiquement sous l'effet d'un effort de rapprochement desdites coquilles, lequel dispositif (30) comporte des moyens de remplissage (41, 42) de ladite cavité de moulage avec de ladite matière polymérisable, et comporte en outre des moyens (34-40) d'exercice d'un effort de rapprochement desdites coquilles (2, 3) produisant une compression du joint (4) assurant une étanchéité entre le joint (4) et les coquilles (2, 3) ; **caractérisé en ce que** ledit joint (4) comporte, à l'écart desdits moyens (10, 11) pour coopérer avec la périphérie des coquilles (2, 3), un trou de remplissage (19) ; **en ce que** lesdits moyens de remplissage (41, 42) sont adaptés à introduire ladite matière dans la cavité de moulage par ledit trou de remplissage (19) ; et **en ce que** lesdits moyens (34-40) d'exercice d'un effort de rapprochement sont adaptés à exercer et à relâcher ledit effort respectivement avant et après la mise en oeuvre desdits moyens de remplissage (41, 42).

42. Dispositif selon la revendication 41, **caractérisé en ce que** ledit joint (4) est conforme à l'une quelconque des revendications 29 à 40.

43. Dispositif selon l'une quelconque des revendications 41 ou 42, **caractérisé en ce que** lesdits moyens (34-40) d'exercice d'un effort de rapprochement comportent des moyens (37-40) pour rapprocher lesdites coquilles (2, 3) jusqu'à atteindre un effort de rapprochement prédéterminé.

44. Dispositif selon la revendication 43, **caractérisé en ce** lesdits moyens pour rapprocher comportent un vérin (37) relié à une centrale de commande (40).

45. Dispositif selon l'une quelconque des revendications 41 à 44, **caractérisé en ce que** lesdits moyens d'exercice d'un effort de rapprochement comportent, pour appliquer ledit effort sur ladite coquille, deux manchons respectifs (34, 35) de diamètre légèrement inférieur à celui desdites coquilles (2, 3).

46. Dispositif selon l'une quelconque des revendications 41 à 45, **caractérisé en ce qu'**il comporte une unité (31) de réception dudit moule (1) munie desdits moyens (34-40) d'exercice d'un effort de rapprochement.

47. Dispositif selon la revendication 46, **caractérisé en ce** ladite unité (31) de réception du moule (1) comporte des moyens de centrage (32) et des moyens de positionnement angulaire (33).

48. Dispositif selon la revendication 47, **caractérisé en ce que** lesdits moyens de centrage comportent deux doigts (32) orientés longitudinalement adaptés à coopérer avec la surface latérale (15) dudit joint (4) tandis que lesdits moyens de positionnement angulaire comportent une fourchette (33) adaptée à coopérer avec un bossage (20) en saillie par rapport à la surface latérale (15) dudit joint.

49. Dispositif selon l'une quelconque des revendications 41 à 48, **caractérisé en ce que** lesdits moyens de remplissage comportent un poste (41) d'introduction de ladite matière polymérisable dans la cavité dudit moule (1) et un poste (42) de bouchage dudit trou de remplissage, ledit poste d'introduction (41) et ledit poste de bouchage (42) étant disposés côte à côte ; **en ce que** ledit dispositif (30) comporte une unité (31) de réception dudit moule (1) dans une position verticale avec ledit trou de remplissage (19) situé au sommet dudit joint (4) ; et **en ce que** ladite unité (31) de réception du moule (1) est mobile entre une première position où elle est à l'aplomb du poste de bouchage (42) et une deuxième position où elle est à l'aplomb du poste d'introduction (41).

50. Dispositif selon la revendication 49, **caractérisé en ce que** ledit poste (41) d'introduction comporte une buse (48) d'introduction de ladite matière et une buse (49) d'aspiration d'un surplus de matière.

51. Dispositif selon la revendication 50, **caractérisé en ce que** ladite buse (48) d'introduction de matière est inclinée.

52. Dispositif selon l'une quelconque des revendications 50 ou 51, **caractérisé en ce que** l'extrémité distale de ladite buse d'introduction (48) est en-dessous de l'extrémité distale de ladite buse d'aspiration (49).

53. Dispositif selon l'une quelconque des revendications 50 à 52, **caractérisé en ce que** ledit bouchon (5) d'obturation dudit trou de remplissage (19) comporte un trou borgne (51) ; et **en ce que** ledit poste de bouchage (42) comporte une canule (50) adaptée à s'engager dans ledit trou borgne (51) dudit bouchon (5).

54. Dispositif selon la revendication 53, **caractérisé en ce qu'**il comporte des moyens pour relier ladite canule (50) à une source de vide pour maintenir ledit bouchon en place sur ladite canule et pour mettre ladite canule (50) à l'atmosphère pour libérer ledit bouchon (5).

55. Dispositif selon l'une quelconque des revendications 53 ou 54, **caractérisé en ce qu'**il comporte des moyens pour entraîner ledit poste de bouchage (42) pour enfoncer ledit bouchon (5) dans ledit trou de remplissage (19).

## Claims

1. Method of obtaining an optical lens from a polymerisable material, which method uses a mould (1) that is formed of two facing and spaced shells (2, 3) and an annular seal (4) comprising means (10, 11) for cooperating with the periphery of said shells (2, 3) to define a moulding cavity, said seal (4) being adapted to be compressed elastically when said shells (2, 3) are moved toward each other, which method comprises a step of filling said moulding cavity with said polymerisable material, then a step of polymerising the material filling the moulding cavity, and also comprises prior to said polymerization step, a step of applying an external mechanical force to move said shells toward each other and a step of releasing said force, said force compressing the seal (4) to provide sealing between the seal (4) and the shells (2, 3), and which method is **characterised in that** a filling hole (19) is provided in said annular seal (4), away from said means (10, 11) for cooperating with the periphery of the shells (2, 3), **in that** during said filling step said material is introduced into the cavity through said filling hole (19), and **in that** said material is introduced after said step of applying a mechanical external force to move said shells toward each other and before said step of releasing said force.

2. Method according to claim 1, **characterised in that** a plug (5) is provided for plugging each hole (19) in said seal (4) and said filling step comprises, after introducing said material and before said step of releasing said force, a step of plugging each of said holes (19) with one of said plugs (5).

3. Method according to claim 2, **characterised in that** the only hole in said annular seal (4) is said filling hole (19).

4. Method according to claim 3, **characterised in that** said filling step is effected with said mould (1) placed vertically with said filling hole (19) situated at the top of said seal (4) .

5. Method according to claim 4, **characterised in that** said filling hole comprises a first section (21) and a second section (22), the first section (21) extending between a first end opening into said moulding cavity and a second end at which it is joined to a first end of said second section (22), **in that** a plug (5) is provided for plugging said filling hole and comprises a body (25) adapted to fit tightly into said first section (21) of the filling hole (19) to plug it and to define with said second section (22) of the filling hole (19) a chamber (26) around said body (25) of the plug (5), and **in that** said cavity and said first section (21) of the hole (19) are filled during said step of introducing the polymerisable material into the cavity.

6. Method according to claim 5, **characterised in that** said moulding cavity and said first section (21) of the filling hole (19) are filled during said filling step to the level of the junction between the first section (21) and the second section (22).

7. Method according to claim 6, **characterised in that** the volume of said chamber (26) around the body (25) of the plug (5) is greater than the volume of said first section (21) of the filling hole (19).

8. Method according to any of claims 5 to 7, **characterised in that** said filling hole (19) further comprises a third section (23) that extends between a first end at which it is joined to the second end of the second section (22) and a second end that opens to the exterior of said seal (4), and **in that** said plug (5) comprises a head (24) adapted to fit tightly into said third section (23) of the filling hole (19) to plug it, so that said chamber (26) is then entirely closed.

9. Method according to any of claims 1 to 8, **characterised in that** a boss (20) is provided around said filling hole (19) and projects relative to the lateral surface (15) of the seal (4).

10. Method according to any of claims 1 to 9, **characterised in that** said filling hole (19) is oriented in a radial direction.

11. Method according to any of claims 1 to 10, **characterised in that** said filling hole (19) is halfway or substantially halfway between said means (10, 11) adapted to cooperate with a first shell (2) and with the second shell (3), respectively.

12. Method according to any of claims 1 to 11, **characterised in that** said step of applying an external mechanical force to move said shells toward each other is effected by moving said shells toward each other until a predetermined value of said force is reached.

13. Method according to claim 12, **characterised in that** said force to move said shells toward each other is produced by an actuator (37) connected to a control centre (40).

14. Method according to either claim 12 or claim 13, **characterised in that**, during said step of applying a force to move said shells toward each other, said force is applied to said shells by way of respective sleeves (34, 35) having a diameter slightly less than that of said shells (2, 3).

15. Method according to any of claims 1 to 14, **characterised in that** a unit (31) is provided for receiving said mould (1) and **in that** said step of applying a force to move said shells toward each other and said step of releasing said force are effected by means of said receiving unit (31).

16. Method according to claim 15, **characterised in that** centring means (32) and angular positioning means (33) are provided in said unit (31) for receiving the mould (1).

17. Method according to claim 16, **characterised in that** said centring means comprise two fingers (32) oriented longitudinally and adapted to cooperate with the lateral surface (15) of said seal (4) and said angular positioning means comprise a fork (33) adapted to cooperate with a boss (20) projecting relative to the lateral surface (15) of said seal.

18. Method according to any of claims 15 to 17, **characterised in that**, for effecting said filling step, there are provided a station (41) for introducing said polymerisable material into the cavity of said mould (1) and a station (42) for plugging said filling hole, said introduction station (41) and said plugging station (42) being disposed side by side, and **in that** said unit (31) for receiving the mould (1) is movable between a first position in which it is vertically aligned with the plugging station (42) and a second position in which it is vertically aligned with the introduction station (41).

19. Method according to any of claims 1 to 18, **characterised in that** said step of introducing the polymerisable material is effected by means of a station (41) that comprises a nozzle (48) for introducing said material and a nozzle (49) for aspirating surplus material.

20. Method according to claim 19, **characterised in that** said nozzle (48) for introducing said material is inclined.

21. Method according to either claim 19 or claim 20, **characterised in that** the distal end of said nozzle (48) for introducing said material is below the distal end of said aspiration nozzle (49).

22. Method according to any of claims 1 to 21,
**characterised in that** a plug (5) is provided for plugging said filling hole (19) and comprises a blind hole (51) and **in that** a step of plugging said filling hole with said plug is effected at a plugging station (42) comprising a canula (50) adapted to be engaged in said blind hole (51) of said plug (5).

23. Method according to claim 22, **characterised in that** said canula is connected to a vacuum system to hold said plug in place on said canula and said canula (50) is vented to the atmosphere to release said plug (5).

24. Method according to either claim 22 or claim 23, **characterised in that** said plug (5) is pressed into said filling hole (19) by driving said plugging station (42).

25. Method according to any of claims 1 to 24, **characterised in that** there is provided a relatively narrow lug (17) projecting relative to the lateral surface (15) of said seal (4) and having a transverse end surface (18) at a predetermined location relative to the remainder of the seal.

26. Method according to claim 25, **characterised in that**, for effecting said filling step, there are provided a station (41) for introducing said polymerisable material into the cavity of said mould (1) and a station (42) for plugging said filling hole (19), said introduction station (41) and said plugging station (42) being disposed side by side, **in that** a unit (31) is provided for receiving said mould (1) in a predetermined position and said receiving unit (31) is mobile between a first position in which it is vertically aligned with the plugging station (42) and a second position in which it is vertically aligned with the introduction station (41).

27. Method according to claim 26, **characterised in that** at least one optical cell (46, 47) is provided for detecting the position of the mould (1) relative to said filling station (41) or said plugging station (42) and **in that** said unit (31) for receiving the mould is placed in vertical alignment with said filling station (41) or in vertical alignment with said plugging station (42) in conjunction with said optical cell (46, 47).

28. Method according to claim 27, **characterised in that** respective optical cells (46, 47) are provided for said filling station (41) and said plugging station (42).

29. Annular seal for obtaining an optical lens from a polymerisable material and suitable for use in the method according to any of claims 1 to 28, said seal comprising means (10, 11) for cooperating with the periphery of two facing moulding shells (2, 3) to define a moulding cavity, adapted to be compressed elastically by a force for moving the shells toward each other that is applied between the means (10, 11) adapted to cooperate with the periphery of a first shell (2) and the means (10, 11) adapted to cooperate with the periphery of the second shell (3), which seal is **characterised in that** it comprises:
- a filling hole (19) away from said means (10, 11) and adapted to cooperate with the periphery of the shells (2, 3), the filling hole comprising a first section (21) and a second section (22), the first section (21) extending between a first end opening into said moulding cavity and a second end by which it is joined to a first end of the second section (22), and
- a plug (5) comprising a body (25) adapted to fit tightly into said first section (21) of the filling hole (19) to plug it and to define with said second section (22) of the filling hole (19) a chamber (26) around said body (25) of the plug.

30. Seal according to claim 29, **characterised in that** the only hole in it is said filling hole (19).

31. Seal according to either claim 29 or claim 30, **characterised in that** the volume of said chamber (26) around the body (25) of the plug (5) is greater than the volume of said first section (21) of the filling hole (19).

32. Seal according to any of claims 29 to 31, **characterised in that** said filling hole (19) further comprises a third section (23) that extends between a first end at which it is joined to the second end of the second section (22) and a second end that opens to the exterior of said seal (4) and **in that** said plug (5) comprises a head (24) adapted to fit tightly into said third section (23) of the filling hole (19) to plug it so that said chamber (26) is then entirely closed.

33. Seal according to any of claims 29 to 32, **characterised in that** it comprises a boss (20) around said filling hole (19) and projecting relative to its lateral surface (15).

34. Seal according to any of claims 29 to 33, **characterised in that** said filling hole (19) is oriented in a radial direction.

35. Seal according to any of claims 29 to 34, **characterised in that** said filling hole (19) is halfway or substantially halfway between said means (10, 11) adapted to cooperate with a first shell (2) and with the second shell (3), respectively.

36. Seal according to any of claims 29 to 35, **characterised in that** it comprises a relatively narrow lug (17) projecting relative to the lateral surface (15) of said seal (4) and having a transverse edge surface (18) at a predetermined location relative to the remainder of the seal.

37. Seal according to claim 36, **characterised in that** the angular distance between said filling hole (19) and said relatively narrow lug (17) is such that said lug (17) is visible above said seal (14) when said mould (1) is placed with said filling hole (19) at the top.

38. Seal according to any of claims 29 to 37, **characterised in that** said plug (5) for plugging said filling hole (19) comprises a blind hole (51) having its closed end inside said body (25).

39. Seal according to any of claims 29 to 38, **characterised in that** it comprises a belt (8) to the inside of which is joined a bead (9) narrower than said belt (8), said bead having a dovetail-shaped cross section whose narrower side is that by which said bead (9) is joined to said belt (8), so that there exists on either side of said bead (9) a recess adapted to receive one of said shells (2, 3).

40. Seal according to any of claims 29 to 39, **characterised in that** said plug (5) and the remainder of said seal (4) are made from the same material.

41. Device for obtaining an optical lens from a polymerisable material and suitable for use in the method according to any of claims 1 to 28 prior to said polymerization step, the device comprising a mould (1) formed of two facing and spaced moulding shells (2, 3) and an annular seal (4) comprising means (10, 11) for cooperating with the periphery of said shells (2, 3) to define a moulding cavity, said seal (4) being adapted to be compressed elastically by a force for moving said shells toward each other, which device (30) comprises means (41, 42) for filling said moulding cavity with said polymerisable material and means (34-40) for applying a force for moving said shells (2, 3) toward each other compressing the joint (4) to provide sealing between the seal (4) and the shells (2, 3), and is **characterised in that** said seal (4) comprises a filling hole (19) away from said means (10, 11) for cooperating with the periphery of the shells (2, 3), **in that** said filling means (41, 42) are adapted to introduce said material into the moulding cavity through said filling hole (19), and **in that** said means (34-40) for applying a force for moving said shells toward each other are adapted to apply and release said force respectively before and after the use of said filling means (41, 42).

42. Device according to claim 41, **characterised in that** said seal (4) conforms to any of claims 29 to 40.

43. Device according to either claim 41 or claim 42, **characterised in that** said means (34-40) for applying a force for moving said shells (2, 3) toward each other comprise means (37, 40) for moving said shells toward each other until a predetermined force is reached.

44. Device according to claim 43, **characterised in that** said means for applying a force for moving said shells toward each other comprise an actuator (37) connected to a control centre (40).

45. Device according to any of claims 41 to 44, **characterised in that** said means for applying a force for moving said shells toward each other comprise, for applying said force to said shell, respective sleeves (34, 35) whose diameter is slightly less than that of said shells (2, 3).

46. Device according to any of claims 41 to 45, **characterised in that** it comprises a unit (31) for receiving said mould (1) provided with said means (34-40) for applying a force for moving said shells toward each other.

47. Device according to claim 46, **characterised in that** said unit (31) for receiving the mould (1) comprises centring means (32) and angular positioning means (33).

48. Device according to claim 47, **characterised in that** said centring means comprise two longitudinally oriented fingers (32) adapted to cooperate with the lateral surface (15) of said seal (4) and said angular positioning means comprise a fork (33) adapted to cooperate with a boss (20) projecting relative to the lateral surface (15) of said seal.

49. Device according to any of claims 41 to 48, **characterised in that** said filling means comprise a station (41) for introducing said polymerisable material into the cavity of said mould (1) and a station (42) for plugging said filling hole, said introduction station (41) and said plugging station (42) being disposed side by side, **in that** said device (30) comprises a unit (31) for receiving said mould (1) in a vertical position with said filling hole (19) situated at the top of said seal (4), and **in that** said unit (31) for receiving the mould (1) is movable between a first position in which it is vertically aligned with the plugging station (42) and a second position in which it is vertically aligned with the introduction station (41).

50. Device according to claim 49, **characterised in that** said introduction station (41) comprises a nozzle (48) for introducing said material and a nozzle (49) for aspirating surplus material.

51. Device according to claim 50, **characterised in that** said material introduction nozzle (48) is inclined.

52. Device according to either claim 50 or claim 51, **characterised in that** the distal end of said introduction nozzle (48) is below the distal end of said aspiration nozzle (49).

53. Device according to any of claims 50 to 52, **characterised in that** said plug (5) for plugging said filling hole (19) comprises a blind hole (51) and **in that** said plugging station (42) comprises a canula (50) adapted to be engaged in said blind hole (51) of said plug (5).

54. Device according to claim 53, **characterised in that** it comprises means for connecting said canula (50) to a vacuum system to hold said plug in place on said canula and for venting said canula (50) to the atmosphere to release said plug (5).

55. Device according to either claim 53 or claim 54, **characterised in that** it comprises means for driving said plugging station (42) to push said plug (5) into said filling hole (19).

## Patentansprüche

1. Verfahren zum Erhalten einer optischen Linse ausgehend von einem polymerisierbaren Material, bei welchem man eine Form (1) verwendet, gebildet aus zwei Kokillen (2,3) die gegenüberstehend unter Abstand zueinander angeordnet sind, sowie einer ringförmigen Dichtung (4), die Mittel (10,11) umfasst, um mit der Peripherie der Kokillen (2,3) zusammen zu wirken, um einen Gusshohlraum zu definieren, wobei die Dichtung 4 ausgelegt ist, um elastisch unter der Wirkung einer Annäherung der Kokillen (2,3) komprimiert zu werden, wobei das Verfahren einen Schritt des Füllens des Gusshohlraumes mit dem polymerisierbaren Material umfasst, gefolgt von einem Polymerisationsschritt des den Formhohlraum füllenden Materials, wobei das Verfahren ferner umfasst, und zwar vor dem Schritt der Polymerisation sowohl einen Schritt der Ausübung einer externen mechanisch bewirkten Annäherungskraft bezüglich der Kokillen, als auch einen Schritt des Aufgebens bzw. Aufhebens der Krafteinwirkung, wobei die Krafteinwirkung eine Kompression der Dichtung (4) erzeugt, eine Abdichtung zwischen der Dichtung (4) und den Kokillen (2,3) bereitstellend, **dadurch gekennzeichnet, dass** man in der ringförmigen Dichtung (4), beabstandet bezüglich der Mittel (10,11) zum Zusammenwirken mit der Peripherie der Kokillen (2,3) ein Befüllloch (19) vorsieht; dass bei dem Befüllschritt das Einführen des Materials in den Hohlraum über das Befüllloch (19) erfolgt; und dass das Einführen des Materials durchgeführt wird nach dem Schritt des Bewirkens oder Ausübens einer externen mechanisch bewirkten Annäherungskraft und vor dem Schritt des Aufhebens bzw. Aufgebens der Kraft oder Kraftbeaufschlagung.

2. Verfahren nach Anspruch 1, **dadurch gekennzeichnet, dass** man einen Versperrstopfen (5) für jedes Loch (19) vorsieht, wie in der Dichtung (4) vorgesehen, wobei der Schritt des Füllens oder Befüllens nach dem Einführen des Materials und vor dem Schritt des Aufgebens oder Aufhebens der Kraft oder Kraftbeaufschlagung ein Schritt des Versperrens jeder Öffnung (19) mit einem Stopfen (5) vorgesehen ist.

3. Verfahren nach Anspruch 2, **dadurch gekennzeichnet, dass** man als Loch in der ringförmigen Dichtung (4) ausschließlich das Befüllloch (19) vorsieht.

4. Verfahren nach Anspruch 3, **dadurch gekennzeichnet, dass** man den Schritt des Befüllens ausführt, indem man die Form (1) vertikal anordnet, wobei das Befüllloch (19) sich am Scheitel der Dichtung (4) befindet.

5. Verfahren nach Anspruch 4, **dadurch gekennzeichnet, dass** man vorsieht, dass das Befüllloch einen ersten Abschnitt (21) und einen zweiten Abschnitt (22) umfasst, wobei der erste Abschnitt (21) sich zwischen einem ersten Ende, befindlich an der Seite des Formhohlraums und einem zweiten Ende erstreckt, mittels welchem ein Anschluss erfolgt bezüglich eines ersten Endes des zweiten Abschnitts (22); und das man einen Verschluss- oder Versperr-Stopfen (5) für das Befüllloch bzw. die Befüllöffnung vorsieht, umfassend einen Körper (25), der ausgelegt ist Kraftschlüssig in dem ersten Abschnitt (21) des Befülllochs (19) vorzulegen, um dies zu verschließen und ausgelegt um somit mit dem zweiten Abschnitt (22) des Befülllochs (19) eine Kammer (26) auszubilden, die den Körper (25) des Stopfens bzw. Pfropfens bzw. des Korkens (5) umgibt; und dass während dem Schritt des Einführens des polymerisierbaren Materials in den Hohlraum man den Hohlraum und den ersten Abschnitt (21) des Loches bzw. der Öffnung (19) füllt.

6. Verfahren nach Anspruch 5, **dadurch gekennzeichnet, dass** in dem Schritt des Befüllens man den Formhohlraum und den ersten Abschnitt (21) des Befülllochs bzw. der Befüllöffnung (19) befüllt bis hin zum Übergang zwischen dem ersten Abschnitt (21) und dem zweiten Abschnitt (22).

7. Verfahren nach Anspruch 6, **dadurch gekennzeichnet, dass** man vorsieht, dass das Volumen der Kammer (26), die den Körper (25) des Stopfens (5) umgibt, größer ist als das Volumen des ersten Abschnitts (21) des Befüllloches (19).

8. Verfahren nach einem der Ansprüche 5 bis 7, **dadurch gekennzeichnet, dass** man vorsieht, dass das Befüllloch (19) zusätzlich einen dritten Abschnitt (23) umfasst, der sich zwischen einem ersten Ende, mittels welchem ein Anschluss erfolgt bezüglich dem zweiten Ende des zweiten Abschnitts (22) und einem zweiten Ende erstreckt, äußerlich bezüglich der Dichtung (4) mündend; und dass man vorsieht, dass der Verschluss- oder Versperrstopfen oder -Korken (5) einen Kopf (24) umfasst, ausgelegt um kraftschlüssig oder eingestellt gepresst vorzuliegen in dem dritten Abschnitt (23) der Befüllöffnung bzw. des Befülllochs (19), um dies zu versperren oder zu verschließen, so dass die Kammer (26) somit vollständig geschlossen ist.

9. Verfahren nach einem der Ansprüche 1 bis 8, **dadurch gekennzeichnet, dass** man herum um das Befüllloch (19) einen Höcker (20) vorsieht, vorspringend mit Bezug auf die Lateralfläche (15) der Dichtung (4).

10. Verfahren nach einem der Ansprüche 1 bis 9, **dadurch gekennzeichnet, dass** man vorsieht, dass das Befüllloch (19) in einer radialen Richtung ausgerichtet ist.

11. Verfahren nach einem der Ansprüche 1 bis 10, **dadurch gekennzeichnet, dass** man vorsieht, dass das Befüllloch (19) angeordnet ist bei halbem Abstand oder in etwa Mittig bezüglich der Mittel (10, 11) zum jeweiligen Zusammenwirken mit einer ersten der Kokillen (2) und einer zweiten der Kokillen (3).

12. Verfahren nach einem der Ansprüche 1 bis 11, **dadurch gekennzeichnet, dass** der Schritt des Ausübens bzw. Bewirkens einer externen mechanisch bewirkten Kraft der Annäherung ausgeübt wird indem man die Kokillen solange annähert, bis eine vorbestimmte Annäherungskraft erreicht ist.

13. Verfahren nach Anspruch 12, **dadurch gekennzeichnet, dass** man die Annäherungskraft mit einem Nonius (37) erzeugt, der mit einer Steuerzentrale (40) verbunden ist.

14. Verfahren nach einem der Ansprüche 12 oder 13, **dadurch gekennzeichnet, dass** während dem Schritt des Ausübens einer Annäherungskraft man die Kraft anwendet an die Kokillen mittels zweier jeweiliger Stutzen (34, 35), von leicht geringerem Durchmesser als die Kokillen (2, 3).

15. Verfahren nach einem der Ansprüche 1 bis 14, **dadurch gekennzeichnet, dass** man eine Aufnahme- oder Empfangseinheit (31) der Form (1) vorsieht und dass man den Schritt des Bewirkens oder Ausübens einer Annäherungskraft und den Schritt des Aufhebens bzw. Aufgebens der Kraft bzw. Krafteinwirkung mittels der Aufnahmeeinheit (31) durchführt.

16. Verfahren nach Anspruch 15, **dadurch gekennzeichnet, dass** man in der Einheit (31) zum Aufnehmen der Form (1) Zentriermittel (32) und winkelmäßige Positioniermittel (33) vorsieht.

17. Verfahren nach Anspruch 16, **dadurch gekennzeichnet, dass** die Zentriermittel zwei Finger (32) umfassen, die in longitudinaler Richtung ausgerichtet sind und ausgelegt sind zum Wechselwirken mit der lateralen Fläche (15) der Dichtung (4), während die winkelmäßigen Positioniermittel eine Gabel (33) umfassen, ausgelegt zum Wechselwirken mit einem Höcker (20) vorspringend bezüglich der lateralen Fläche (15) der Dichtung.

18. Verfahren nach einem der Ansprüche 15 bis 17, **dadurch gekennzeichnet, dass** man vorsieht zum Durchführen des Schrittes des Befüllens eine Station (41) zum Einführen des polymerisierbaren Materials in den Hohlraum der Form (1), sowie eine Verschlussstation (42) zum Verschließen oder Verstopfen des Befüllungslochs bzw. der Befüllungsöffnung, wobei die Einführstation (41) und die Verschlussstation (42) nebeneinander angeordnet sind, und dass man vorsieht, dass die Einheit (31) zum Aufnehmen der Form (1) beweglich ist zwischen einer ersten Position wo sie ausgerichtet ist bezüglich der Verschlussstation (42) und einer zweiten Position, in welcher sie ausgerichtet ist bezüglich der Einführstation (41).

19. Verfahren nach einem der Ansprüche 1 bis 18, **dadurch gekennzeichnet, dass** man den Schritt des Einführens des polymerisierbaren Materials mittels einer Station (41) durchführt, die eine Düse (48) zum Einführen des Materials sowie eine Düse (49) zum Absaugen eines Überschusses an Material umfasst.

20. Verfahren nach Anspruch 19, **dadurch gekennzeichnet, dass** die Düse (48) zum Einführen von Material geneigt vorliegt.

21. Verfahren nach einem der Ansprüche 19 oder 20, **dadurch gekennzeichnet, dass** man vorsieht, dass das distale Ende der Einführ- bzw. Einspritzdüse (48) unterhalb des distalen Endes der Absaugdüse (49) vorliegt.

22. Verfahren nach einem der Ansprüche 1 bis 21, **dadurch gekennzeichnet, dass** man vorsieht, dass ein Korken oder Stopfen (5) zum Versperren oder Verschließen des Befülllochs bzw. der Befüllöffnung (19) eine Sackbohrung bzw. ein Sackloch (51) umfasst; und dass man einen Schritt des Versperrens oder Verschließens des Befüllloches mit dem Stopfen bzw. Korken durchführt mittels einer Stopfenanbringungs- bzw. einbringungsstation (42), eine Kanüle (50) umfassend, die dazu ausgelegt ist, in Eingriff zu treten in die Sackbohrung (51) des Korkens bzw. Stopfens (5).

23. Verfahren nach Anspruch 22, **dadurch gekennzeichnet, dass** man die Kanüle mit einer Vakuumquelle verbindet, um den Korken ortsfest an der Kanüle zu halten, wohingegen man die Kanüle (50) atmosphärischen Bedingungen aussetzt, um den Korken bzw. Stopfen (5) frei zu geben.

24. Verfahren nach einem der Ansprüche 22 oder 23, **dadurch gekennzeichnet**, das man die Verschlussstation bzw. die Station zum Verschließen (42) antreibt, um den Stopfen oder Korken (5) in das Befüllloch (19) einzudrücken.

25. Verfahren nach einem der Ansprüche 1 bis 24, **dadurch gekennzeichnet, dass** man eine relativ schmale Lasche (17), vorspringend mit Bezug auf die laterale Fläche (15) der Dichtung (4) vorsieht, aufweisend eine transversale Endfläche (18) mit einer vorbestimmten Anordnung mit Bezug auf den Rest der Dichtung.

26. Verfahren nach Anspruch 25, **dadurch gekennzeichnet, dass** man zum Durchführen des Schritts des Befüllens eine Einfüll- bzw. Befüll- oder Einführstation (41) für das polymerisierbare Material in den Hohlraum der Form (1) vorsieht, sowie eine Verschlussstation (42) für das Befüllloch (19), wobei die Einführstation (41) und die Verschlussstation (42) nebeneinander angeordnet sind; und dass man eine Einheit (31) zum Aufnehmen bzw. Empfangen der Form (1) in einer vorbestimmten Position vorsieht, wobei die Einheit (31) zum Aufnehmen beweglich ist zwischen einer ersten Position ausgerichtet bezüglich der Verschlussstation (42) und einer zweiten Position, ausgerichtet bezüglich der Einführstation (41).

27. Verfahren nach Anspruch 26, **dadurch gekennzeichnet, dass** man zumindest eine optische Erfassungszelle (46, 47) bezüglich der Position der Form (1) mit Bezug auf die Befüllstation (41) oder mit Bezug auf die Verschlussstation (42) vorsieht und das man die Einheit (31) zum Aufnehmen der Form ausrichtet bzw. positioniert bezüglich der Befüllstation (41) oder ausrichtet bzw. positioniert bezüglich der Verschlussstation (42) unter Berücksichtigung der optischen Zelle bzw. des optischen Sensors (46, 47).

28. Verfahren nach Anspruch 27, **dadurch gekennzeichnet, dass** man eine optische Zelle bzw. einen optischen Sensor (46,47) für jede von der Befüllstation (41) und der Verschlussstation (42) vorsieht.

29. Ringförmige Dichtung zum Erhalten einer optischen Linse ausgehend von einem polymerisierbaren Material, geeignet zur Verwendung in einem Verfahren nach einem der Ansprüche 1 bis 28, umfassend Mittel (10, 11) zum Zusammenwirken mit der Peripherie von zwei Form- bzw. Gusskokillen (2, 3) gegenüberstehend angeordnet mit Bezug zueinander um einen Form- bzw. Gusshohlraum zu definieren, ausgelegt um elastisch komprimiert zu werden unter der Wirkung bzw. Einwirkung einer Annäherungskraft, ausgeübt zwischen den Mitteln (10, 11) zum Zusammenwirken mit der Peripherie einer ersten der Kokillen (2) und den Mitteln (10, 11) zum Zusammenwirken mit der Peripherie einer zweiten der Kokillen (3), **dadurch gekennzeichnet, dass** die Dichtung umfasst:
- unter Abstand der Mittel (10, 11) zum Zusammenwirken mit der Peripherie der Kokillen (2, 3) ein Befüllloch bzw. eine Befüllöffnung (19) umfassend einen ersten Abschnitt (21) und einen zweiten Abschnitt (22), wobei der erste Abschnitt (21) sich erstreckt zwischen einem ersten Ende, befindlich an der Seite des Form- oder Gusshohlraums und einem zweiten Ende, mittels welchem ein Anschluss erfolgt bezüglich einem ersten Ende des zweiten Abschnitts (22); und
- einen Verschluss oder Versperrstopfen bzw. Korken (5), umfassend einen Körper (25), ausgelegt um kraftschlüssig bzw. eingestellt verspannt zu sein in dem ersten Abschnitt (21) des Befülllochs (19), um dieses zu verschließen oder zu versperren und ausgelegt, um somit in dem zweiten Abschnitt (22) des Befülllochs (19) eine Kammer bzw. einen Raum (26) zu definieren, den Körper des Stopfens oder Korkens (25) umgibt.

30. Dichtung nach Anspruch 29, **dadurch gekennzeichnet, dass** sie als Öffnung oder Loch ausschließlich das Befüllloch (19) umfasst.

31. Dichtung nach einem der Ansprüche 29 oder 30, **dadurch gekennzeichnet, dass** das Volumen der Kammer bzw. des Raums (26), den Körper (25) des Stopfens (5) umgebend, größer ist als das Volumen des ersten Abschnitts (21) des Befülllochs bzw. der Befüllöffnung (19).

32. Dichtung nach einem der Ansprüche 29 bis 31, **dadurch gekennzeichnet, dass** die Befüllöffnung (19) ebenfalls einen dritten Abschnitt (23) umfasst, sich erstreckend zwischen einem ersten Ende mittels welchem ein Anschluss erfolgt bezüglich dem zweiten Ende des zweiten Abschnitts (22) und einem zweiten Ende, mündend äußerlich bezüglich der Dichtung (4); und dass der Verschlussstopfen (5) einen Kopf (24) umfasst, ausgelegt um kraftschlüssig bzw. eingestellt verspannt zu sein in dem dritten Abschnitt (23) des Befülllochs (19), um dieses zu verschließen, so dass die Kammer bzw. der Raum (26) somit vollständig geschlossen ist.

33. Dichtung nach einem der Ansprüche 29 bis 32, **dadurch gekennzeichnet, dass** sie herum um die Befüllöffnung bzw. herum um das Befüllloch (19) einen Höcker (20) umfasst, vorspringend mit Bezug auf die Lateralfläche (15).

34. Dichtung nach einem der Ansprüche 29 bis 33, **dadurch gekennzeichnet, dass** das Befüllloch (19) entlang einer radialen Richtung ausgerichtet ist.

35. Dichtung nach einem der Ansprüche 29 bis 34, **dadurch gekennzeichnet, dass** das Befüllloch (19) angeordnet ist mittig oder in etwa bei halbem Abstand bezüglich der Mittel (10, 11) zum jeweiligen Zusammenwirken mit der ersten (2) der Kokillen bzw. der zweiten (3) der Kokillen.

36. Dichtung nach einem der Ansprüche 29 bis 35, **dadurch gekennzeichnet, dass** sie eine relativ schmale Lasche (17) umfasst, vorspringend mit Bezug auf die Lateralfläche (15) der Dichtung (4) und aufweisend eine transversale Endfläche (18), eine vorbestimmte Lage aufweisend mit Bezug auf den Rest der Dichtung.

37. Dichtung nach Anspruch 36, **dadurch gekennzeichnet, dass** der winkelmäßige Abstand zwischen dem Befüllloch (19) und der relativ schmalen Lasche (17) derart ist, dass wenn die Form (1) mit dem Befüllloch (19) am Scheitel angeordnet ist die Lasche (17) oberhalb der Dichtung (14) sichtbar ist.

38. Dichtung nach einem der Ansprüche 29 bis 37, **dadurch gekennzeichnet, dass** der Stopfen (5) zum Versperren bzw. Verschließen des Befülllochs (19) eine Sackbohrung bzw. ein Sackloch (51) umfasst, geschlossen vorliegend an der Seite des Körpers (25).

39. Dichtung nach einem der Ansprüche 29 bis 38, **dadurch gekennzeichnet, dass** sie einen Gürtel (8) umfasst, an dem sich an der Innenseite eine Wulst (9) anschließt, schmäler als der Gürtel (8), wobei der Wulst im Schnitt eine Schwalbenschwanzform aufweist, dessen schmale Seite jene ist, mittels welcher der Wulst (9) sich an den Gürtel (8) anschließt, so dass beiderseits der Wulst (9) eine Führung zum Aufnehmen einer der Kokillen (2, 3) vorliegt.

40. Dichtung nach einem der Ansprüche 29 bis 39, **dadurch gekennzeichnet, dass** der Stopfen (5) und der Rest der Dichtung (4) aus dem selbem Material gebildet sind.

41. Vorrichtung zum Erhalten einer optischen Linse ausgehend von einem polymerisierbaren Material, geeignet zur Anwendung eines Verfahrens nach einem der Ansprüche 1 bis 28 vorangehend vor dem Schritt der Polymerisation, umfassend eine Form (1), gebildet aus zwei Form- oder Gusskokillen (2, 3), unter Abstand einander gegenüberstehend angeordnet, sowie eine ringförmige Dichtung (4), die Mittel (10, 11) umfasst, zum Zusammenwirken mit der Peripherie der Kokillen (2,3), um einen Form- oder Gusshohlraum zu definieren, wobei die Dichtung (4) ausgelegt ist elastisch komprimiert zu werden unter der Einwirkung einer Annäherungskraft der Kokillen, wobei die Vorrichtung (30) Befüllmittel (41, 42) für den Form- oder Gusshohlraum mit dem polymerisierbaren Material umfasst, und ferner umfasst Mittel (34-40) zum Ausüben bzw. zum Bewirken einer Annäherungskraft der Kokillen (2,3), eine Kompression der Dichtung (4) erzeugend und eine Dichtheit zwischen der Dichtung (4) und den Kokillen (2, 3) gewährleistend; **dadurch gekennzeichnet, dass** die Dichtung (4) unter Abstand von den Mitteln (10, 11) zum Zusammenwirken mit der Peripherie der Kokillen (2, 3) ein Befüllloch bzw. eine Befüllöffnung (19) umfasst; und dass die Befüllmittel (41,42) ausgelegt sind zum Einführen des Materials in den Form- oder Gusshohlraum mittels des Befülllochs (19); und dass die Mittel (34-40) zum Bewirken oder Ausüben einer Annäherungskraft ausgelegt sind die Kraft zu bewirken und aufzuheben bzw. zu lösen und zwar jeweils vor und nach dem Betätigen der Befüllmittel (41,42).

42. Vorrichtung nach Anspruch 41, **dadurch gekennzeichnet, dass** die Dichtung (4) einem der Ansprüche 29 bis 40 genügt.

43. Vorrichtung nach einem der Ansprüche 41 oder 42, **dadurch gekennzeichnet, dass** die Mittel (34-40) zum Ausüben oder Bewirken eine Annäherungskraft Mittel (37-40) umfassen, um die Kokillen (2,3) anzunähern bis eine vorbestimmte Annäherungskraft erreicht ist.

44. Vorrichtung nach Anspruch 43, **dadurch gekennzeichnet, dass** die Mittel zum Annähern einen Nonius (37) umfassen, der mit einer Steuereinheit oder -zentrale (40) verbunden ist.

45. Vorrichtung nach einem der Ansprüche 41 bis 44, **dadurch gekennzeichnet, dass** die Mittel zum Ausüben oder Bewirken einer Annäherungskraft zum Anwenden der Kraft an die Kokille zwei jeweilige Stutzen (34, 35) umfasst, mit leicht geringerem Durchmesser bezüglich jenem der Kokillen (2, 3).

46. Vorrichtung nach einem der Ansprüche 41 bis 45, **dadurch gekennzeichnet, dass** sie eine Einheit (31) zum Aufnehmen der Form (1) umfasst, die mit den Mitteln (34-40) bis zum Ausüben einer Annäherungskraft ausgestattet ist.

47. Vorrichtung nach Anspruch 46, **dadurch gekennzeichnet, dass** die Einheit (31) zum Aufnehmen der Form (1) Zentriermittel (32) sowie winkelmäßige Positioniermittel (33) umfasst.

48. Vorrichtung nach Anspruch 47, **dadurch gekennzeichnet, dass** die Zentriermittel zwei Finger (32) umfassen, in longitudinaler Richtung ausgerichtet und ausgelegt zum Zusammenwirken mit der lateralen Fläche (15) der Dichtung (4), wohingegen die winkelmäßigen Positioniermittel eine Gabel (3) umfassen, ausgelegt zum Zusammenwirken mit einem Höcker (22), vorspringend bezüglich der Lateralfläche (15) der Dichtung.

49. Vorrichtung nach einem der Ansprüche 41 bis 48, **dadurch gekennzeichnet, dass** die Befüllmittel eine Station (41) zum Einführen des polymerisierbaren Materials in den Hohlraum der Form (1) umfassen, sowie eine Verschlussstation (42) für das Befüllloch, wobei die Einführstation (41) und die Verschlussstation (42) nebeneinander angeordnet sind, und dass die Vorrichtung (30) eine Einheit (31) zum Aufnehmen der Form (1) in einer vertikalen Position mit dem Befüllloch (19) am Scheitel der Dichtung (4) befindlich umfasst; und dass die Einheit (31) zum Aufnehmen der Form (1) beweglich ist zwischen einer ersten Position in welcher sie fluchtend bzw. ausgerichtet ist zu der Verschlussstation (42) und einer zweiten Position in welcher sie fluchtend oder ausgerichtet ist bezüglich der Einführstation (41).

50. Vorrichtung nach Anspruch 49, **dadurch gekennzeichnet, dass** die Einführstation (41) eine Düse (48) zum Einführen des Materials und eine Düse (49) zum Absaugen eines Überschusses an Material umfasst.

51. Vorrichtung nach Anspruch 50, **dadurch gekennzeichnet, dass** die Einführdüse (48) für Material geneigt vorliegt.

52. Vorrichtung nach einem der Ansprüche 50 oder 51, **dadurch gekennzeichnet, dass** das distale Ende der Einführdüse (48) unterhalb des distalen Endes der Absaug-oder Ansaugdüse (49) vorliegt.

53. Vorrichtung nach einem der Ansprüche 50 bis 52, **dadurch gekennzeichnet, dass** der Stopfen oder Korken (5) zum Verschließen oder Versperren des Befülllochs (19) ein Sackloch bzw. eine Sackbohrung (51) umfasst; und dass die Verschluss-oder Stopfeneinbringungs- bzw. Verkorkungsstation (42) eine Kanüle (50) umfasst, ausgelegt zum in Eingriff treten mit dem Sackloch (51) des Stopfens (5).

54. Vorrichtung nach Anspruch 53, **dadurch gekennzeichnet, dass** sie Mittel umfasst zum Verbinden der Kanüle (50) mit einer Vakuumquelle zum ortsfesten Halten des Stopfens bezüglich der Kanüle und um die Kanüle atmosphärischen Bedingungen auszusetzen, um den Stopfen oder Korken (5) freizugeben.

55. Vorrichtung nach einem der Ansprüche 53 oder 54, **dadurch gekennzeichnet, dass** sie Mittel umfasst zum Antreiben der Verschlussstation (42), um den Stopfen (5) in das Befüllloch (19) einzudrücken.
